# EUROPÄISCHE PATENTSCHRIFT

(11) **EP 3 439 886 B1**
(45) Veröffentlichungstag und Bekanntmachung des Hinweises auf die Patenterteilung: **18.03.2020**
(21) Anmeldenummer: 18714516.4
(22) Anmeldetag: 29.03.2018
(51) Int. Cl.: B41F 33/00

(54) **VERARBEITUNGSMASCHINENSYSTEM UND VERFAHREN ZUM BETREIBEN EINES VERARBEITUNGSMASCHINENSYSTEMS**
PROCESSING MACHINE SYSTEM AND METHOD FOR OPERATING A PROCESSING MACHINE SYSTEM
SYSTÈME DE MACHINE DE TRAITEMENT ET PROCÉDÉ POUR FAIRE FONCTIONNER UN SYSTÈME DE MACHINE DE TRAITEMENT

(30) Priorität: 31.03.2017 DE 102017205576; 31.03.2017 DE 102017205577
(43) Veröffentlichungstag der Anmeldung: 13.02.2019
(73) Patentinhaber: Koenig & Bauer AG, 97080 Würzburg (DE)
(72) Erfinder: SINGER, Stefan, 01445 Radebeul (DE); ENGELMANN, Matthias, 01561 Lenz (DE); LINDNER, Mario, 01705 Pesterwitz (DE); VOGT, Matthias, 01445 Radebeul (DE); BROSCH, Frank, 01069 Dresden (DE); FÖRSTER, Matthias, 01640 Coswig (DE)
(74) Vertreter: Koenig & Bauer AG
(86) Internationale Anmeldenummer: PCT/EP2018/058196
(87) Internationale Veröffentlichungsnummer: WO 2018/178291

(56) Entgegenhaltungen:
- EP-A1- 2 275 704
- DE-A1-102009 002 251

## Beschreibung

Die Erfindung betrifft ein Verarbeitungsmaschinensystem und ein Verfahren zum Betreiben eines Verarbeitungsmaschinensystems.

Abläufe bzw. Tätigkeiten oder Bedienhandlungen, die im Laufe der Herstellung eines Produktes zu erledigen sind, können berechnet und angezeigt werden. Typisch ist die Anzeige auf einem Display der Produktionsmaschine z. B. einem Leitstand einer Bogendruckmaschine, wobei die Anzeige in der Regel nur an den fest installierten Displays erfolgt.

Beispielsweise an bogenverarbeitenden Maschinen ist es bekannt, für eine Bedienung Bedientafeln mit Tasten zu verwenden. Dabei können die Tasten definierte Funktion haben. Es gibt auch die Möglichkeit, Tasten mit mehreren Funktionen (Doppelfunktion) zu belegen. Bedienungen können auch über Bildschirme z. B. menügesteuert erfolgen. Der Bediener muss sich in diesem Fall in der Oberfläche zum Bedienelement im entsprechenden Screen hin navigieren, was unter anderem die Kenntnis des Screens fordert und mehrere Tastendrücke bedingt.

Auch für die Online-Datenerfassung werden häufig zusätzliche Systeme an Maschinen und Anlagen installiert. Insbesondere für die Erfassung von Verbräuchen von Zusatzmaterialien wie z. B. Waschmitteln oder Produktionszusatzstoffe, die manuell dem Produktionsprozess hinzugefügt werden, gibt es keine automatische Erfassung. Diese Verbräuche werden typischerweise manuell oder z. B. mit Hilfe von Barcodescannern, erfasst. Die Verbindung der erfassten Daten zum Produktionsprozess (Auftrag, Zähler, Zeit, ...) ist aufwändig, weil es in der Regel keine direkte Verbindung zur Steuerung der Produktionsmaschine gibt. Eine Datenerfassung von Verbrauchsmaterialien z. B. für Bogendruckmaschinen ist zudem aufwändig, da es zur Zeit keine durchgängige Lösung gibt. Die meisten Produkte werden überhaupt nicht erfasst oder lediglich manuell auf Papier bzw. Zetteln oder mit Barcodescannern.

Die Abläufe in einer Produktion werden weiterhin über Zettel z. B. Auftragstasche, Stapelkarten, o. ä. gesteuert. Für die Herstellung von Produkten z. B. Faltschachteln sind typischerweise Maschinen von unterschiedlichen Herstellern (Drucken, Stanzen, Kleben, Verpacken, Stapeln, ...) beteiligt. Die Automatisierung sowie die Fähigkeit zur Vernetzung sind in den beteiligten Maschinen mehr oder weniger vorbereitet. Eine hardwaremäßige bzw. permanente Verbindung aller Maschinen z. B. mit einem Produktionssteuerungssystem wurde daher bisher nicht durchgängig realisiert. Auch aus wirtschaftlich Gründen ist eine solche Verbindung der Maschinen bisher nicht realisiert. Eine Anbringung von Datenerfassungsstationen benötigt Platz und muss mit den Umwelteinflüssen wie Schmutz, Feuchtigkeit, usw. zurechtkommen. Entsprechende Lösungen sind deshalb aufwendig und teuer.

Bei einer Nutzung von mobilen Endgeräten in einer Produktion zur Datenerfassung oder zur Bedienung von Maschinen (mobile und stationäre Anwendungen) sind die Endgeräte für die Energieversorgung typischerweise mit Akkus ausgestattet. Das Aufladen erfolgt üblicherweise nach der Nutzung durch Anstecken an ein Ladegerät. Es ist auch möglich zusätzliche Akkus über eine Leitung an das Endgerät anzuschließen. Für die Bedienung ist das jedoch ergonomisch ungünstig.

Aus der DE 43 06 098 A1 ist eine Einrichtung zum Steuern einzelner Funktionseinheiten einer Druckmaschine bekannt, wobei eine transportable Bedienvorrichtung vorgesehen ist, die an einer Parkposition einer entsprechenden Funktionseinheit angebracht wird und die in eine Vielzahl von Oberflächenbereichen aufgegliedert ist. Über eine vorgesehene Codiereinheit werden je nach gewählter Parkposition die Oberflächenbereiche der transportablen Bedienvorrichtung optisch sichtbar den entsprechenden Funktionen der Funktionseinheit zuordnet. Nachteilig an dieser Lösung ist, dass an der transportablen Bedienvorrichtung lediglich die Funktionen der entsprechenden Funktionseinheit optisch sichtbar gemacht werden.

Aus der EP 1 247 656 A1 ist eine Anlage für die Herstellung von Druckprodukten bekannt, wobei die relative Lage eines frei beweglichen Eingabemittels zu den Bearbeitungsstationen automatisch erkannt wird. Mit einem einzigen Eingabemittel können die Bearbeitungsstationen einer oder mehrerer Maschinen für Einstellungen, Korrekturen, zur Optimierung, Fehlerquittierung, zu Start und Stopp lokal bedient werden. Nachteilig an dieser Lösung ist, dass lediglich eine Maschinenbedienung beinhaltet ist.

Aus der DE 102 34 467 A1 ist ein Verfahren zur automatisierten Steuerung einer technischen Anlage und ein Prozessleitsystem zur Durchführung des Verfahrens bekannt, wobei in einer mobilen Bedieneinheit erzeugte Prozessführungssignale drahtlos an Schnittstellen übertragen und von diesen an eine zentrale Steuereinrichtung weitergeleitet werden. Nachteilig an dieser Lösung ist, dass lediglich Prozessführungssignale berücksichtigt werden.

Aus der DE 103 39 571 A1 ist ein Verfahren und eine Vorrichtung zur Optimierung eines Auftragswechsels bekannt, wobei mittels eines Steuerungsrechners die optimierte Reihenfolge von fällig werdenden Arbeiten erstellt wird. Diese errechnete Reihenfolge wird dem Bedienpersonal visuell dargestellt, wobei das Bedienpersonal mittels ein oder mehrerer an der Bedruckstoffe verarbeitenden Maschine angebrachter Anzeigevorrichtungen durch die einzelnen Schritte geleitet wird. Nachteilig an dieser Lösung ist, dass das Bedienpersonal am Leitstand der Maschine zu bleiben hat und die Flexibilität damit eingeschränkt ist. Des Weiteren können nur Prozessschritte berechnet und dargestellt werden.

Aus der DE 10 2006 052 646 A1 ist eine Druckmaschine mit mehreren Bedienzonen bekannt, wobei die Position einer beweglichen Steuereinrichtung erfasst wird und anhand dieser Position bestimmte Funktionen der Bedruckstoffe verarbeitenden Maschine frei geschaltet oder gesperrt werden. Nachteilig an dieser Lösung ist, dass lediglich Maschinenfunktionen beinhaltet sind bzw. dass eine umständliche bzw. ungenaue und ggf. zeitraubende Positionserfassung der beweglichen Steuereinrichtung erfolgen muss.

Aus der DE 10 2008 009 177 A1 ist ein Druckmaschinensteuerungssystem bekannt, wobei mindestens eine mobile Bedieneinrichtung vorgesehen ist, mit Hilfe derer abhängig von einem aktuellen Benutzer derselben und/oder abhängig von einem aktuellen Einsatzort derselben Funktionalitäten mindestens eines Aggregats der Druckmaschine steuerbar sind. Nachteilig an dieser Lösung ist, dass lediglich ein maschinen- und/oder produktionszustandsspezifischer Funktionsumfang beinhaltet ist.

Aus der DE 10 2009 002 251 A1 ist eine Druckmaschine mit integriertem Bediensystem bekannt, wobei die Maschine automatisiert arbeitet und Störungen bzw. Einstellungskorrekturen dem Bediener über Displays anzeigt. Die Ausgabe der Information kann auch über Mobiltelefon bzw. PDA erfolgen. Nachteilig an dieser Lösung ist, dass eine voll automatisierte Maschine extrem teuer und auch störanfällig ist. Nicht zuletzt stellt sich das Problem der Realisierbarkeit einer vollautomatisiert betriebenen Maschine.

Aus der DE 10 2012 217 364 A1 ist ein Verfahren und eine Vorrichtung zur Handhabung von Bedruckstoffgebinden in einem Bedruckstoffversorgungssystem einer eine Druckmaschine umfassenden Druckerei bekannt, wobei mittels Bedienpannels einer Eintrittsstelle und eines Aggregats der Status und/oder Aufenthaltsort von Bedruckstoffgebinden in einem Datenbankensystem geändert wird. Die Bedienpannels sind für mobile Bedienhandlungen bzw. für eine schnelle Überwachung eines Materialflusses bzw. für eine Materialverfolgung nicht geeignet.

Aus der CH 706 471 A1 ist eine mobile Einheit zur Bereitstellung von produktionsanlagespezifischen Funktionen bekannt, wobei die produktionsanlagespezifischen Funktionen der mobilen Einheit in Abhängigkeit eines über eine räumliche Position der mobilen Einheit ermittelten Sektors bereitzustellen sind. Nachteilig an dieser Lösung ist, dass lediglich produktionsanlagespezifische Funktionen bereitgestellt werden.

Ein Überwachen einer Schwingungen erzeugenden Maschine ist aus der EP 2 275 704 A1 bekannt, wobei ein Ausgeben einer Information auch ein Versenden mindestens einer SMS auf mindestens ein Handy betreffen kann.

Der Erfindung liegt die Aufgabe zugrunde, ein alternatives Verarbeitungsmaschinensystem bzw. ein alternatives Verfahren zum Betreiben eines Verarbeitungsmaschinensystems bereitzustellen.

Erfindungsgemäß wird die Aufgabe durch die Merkmale der unabhängigen Ansprüche gelöst. Vorteilhafte Ausgestaltungen ergeben sich aus den Unteransprüchen, der Beschreibung und der Zeichnung.

Die Erfindung hat den Vorteil, dass ein alternatives Verarbeitungsmaschinensystem bzw. ein alternatives Verfahren zum Betreiben eines Verarbeitungsmaschinensystems bereitgestellt wird.

Beispielsweise kann ein Verarbeitungsmaschinensystem mit mindestens einer mobilen Bedieneinheit vorgesehen sein, wobei mit der mobilen Bedieneinheit maschinenrelevante, prozessrelevante und/oder verbrauchsmaterialrelevante, insbesondere bedruckstoffrelevante, Daten einem Bediener zur Verfügung stellbar sind bzw. zur Verfügung gestellt werden. Prozessrelevante Daten können dabei Daten für Einstellungen, Korrekturen, zur Optimierung, Fehlerquittierung bzw. zu Start und Stopp von Bearbeitungsstationen einer oder mehrerer Maschinen umfassen. Die Daten können auch die Regelung, Steuerung, Diagnose und/oder Visualisierung einzelner Prozessschritte oder Prozesszustände betreffen oder allgemeine Funktionen wie zum Beispiel Informationen über den Maschinenzustand oder den Produktionszustand. Weiter kann eine Steuerung von Einrichtungen der Produktionsanlage, eine Anzeige von Zustandsdaten von Einrichtungen der Produktionsanlage, eine Anzeige von Serviceanleitungen von Einrichtungen der Produktionsanlage, eine Anzeige von Reparaturanleitungen von Einrichtungen der Produktionsanlage und/oder eine Anzeige von Wegleitungsinformationen zum Auffinden von Einrichtungen der Produktionsanlage umfasst sein.

Weiter können dem Bediener durch die mobile Bedieneinheit Daten über auszuführende Bedienhandlungen an einer Verarbeitungsmaschine und/oder einer Weiterverarbeitungsmaschine zur Verfügung gestellt werden. Insbesondere erfolgt die Kommunikation der mobilen Bedieneinheit drahtlos. Dabei weist die Bedieneinheit bevorzugt eine Anzeige- oder Darstellungseinrichtung zur visualisierten Darstellung von Daten auf. Insbesondere ist für die Bedieneinheit ein berührungsempfindliches Display vorgesehen, über welches insbesondere Eingaben beispielsweise über Daten möglich sind. Die mobile Bedieneinheit kann weiter eine Bedieneinheit einer Verarbeitungsmaschine und/oder einer Weiterverarbeitungsmaschine sein. Besonders bevorzugt ist die mobile Bedieneinheit als Smartphone ausgebildet. Bedienhandlungen können insbesondere Schritte sein, welche von einer Steuereinrichtung bzw. einer Datenverwaltungseinrichtung berechnet oder vorgegeben sein können. Als Datenverwaltungseinrichtung bzw. Datenverarbeitungseinrichtung wird beispielsweise eine separate Recheneinrichtung vorgesehen, wobei die Datenverwaltungseinrichtung bevorzugt als übergeordnete und/oder maschinenunabhängige Einrichtung konfiguriert ist. Eine maschinenunabhängige Datenverwaltungseinrichtung erlaubt insbesondere eine logistische Verwaltung beispielsweise von Verbrauchsmaterial, insbesondere von zu verarbeitenden bzw. verarbeiteten Bedruckstoffen, auch an mehreren Verarbeitungsmaschinen und/oder Weiterverarbeitungsmaschinen. Insbesondere von Helfern kann eine solche maschinenunabhängige Datenverwaltungseinrichtung ohne ständige An- und Abmeldeprozesse an einer Verarbeitungsmaschine und/oder Weiterverarbeitungsmaschine genutzt werden.

Beispielsweise können durch die mobile Bedieneinheit dem Bediener Daten über insbesondere unmittelbar folgende auszuführende Bedienhandlungen übermittelt und/oder anzeigt werden. Insbesondere können die Daten über auszuführende Bedienhandlungen dabei Daten über einzelne Schritte enthalten und/oder darstellen. Beispielsweise können auch einzelne Schritte der auszuführenden Bedienhandlungen bevorzugt in Abhängigkeit einer Quittierung durch den Bediener zur Verfügung gestellt bzw. übermittelt und/oder dargestellt werden. Bevorzugt wird der Bediener von der Bedieneinheit durch auszuführende Bedienhandlungen und/oder einzelne Schritte insbesondere von Bedienhandlungen geleitet. Bevorzugt enthalten die Daten über auszuführende Bedienhandlungen Daten über eine Reihenfolge und/oder über Orte von Bedienhandlungen. Dabei können die Bedienhandlungen über die mobile Bedieneinheit auch in nach vorgegebenen oder vorwählbaren Kriterien optimierter Reihenfolge zur Verfügung gestellt werden.

Beispielsweise enthalten die von der Bedieneinheit zur Verfügung gestellten Daten Informationen und/oder Anweisungen zu einem Materialwechsel bzw. Verbrauchsmaterialwechsel oder einem Auftragswechsel an einer Verarbeitungsmaschine, insbesondere einer bogenverarbeitenden Maschine, beispielsweise einer Bogendruckmaschine, bevorzugt einer Bogenoffsetrotationsdruckmaschine in Aggregat- und Reiheinbauweise, und/oder einer Weiterverarbeitungsmaschine. Bevorzugt können die von der mobilen Bedieneinheit zur Verfügung gestellten Daten Daten von mindestens einem Verbrauchsmaterial einer Verarbeitungsmaschine und/oder einer Weiterverarbeitungsmaschine enthalten. Insbesondere ist vorgesehen, Daten über Restmengen von Verbrauchsmaterial an einer Verarbeitungsmaschine und/oder Weiterverarbeitungsmaschine und/oder einem Materiallagersystem zur Verfügung zu stellen. Beispielsweise kann die Bedieneinheit mit einer Datenverwaltungseinrichtung und/oder mindestens einer Maschinensteuerung kommunizieren. Weiter kann der Bediener auch ausgeführte Bedienhandlungen über die Bedieneinheit einer Datenverwaltungseinrichtung und/oder einer Maschinensteuerung übermitteln. Insbesondere kann verbrauchtes bzw. eingesetztes Verbrauchsmaterial der Datenverwaltungseinrichtung übermittelt werden, so dass von der Datenverwaltungseinrichtung ein aktualisierter Materiallagerbestand erfasst ist bzw. Daten des hinterlegten Materiallagerbestandes aktuell gehalten werden. Auch Daten eines Materiallagersystems können in der Datenverwaltungseinrichtung hinterlegt sein bzw. der Bedieneinheit übermittelt werden, welche diese Daten dann dem Bediener zur Verfügung stellen kann.

Damit kann insbesondere eine einfache und rechtzeitige Information von zu erledigenden Bedienhandlungen bzw. Tätigkeiten an den oder die an der Produktion beteiligten Mitarbeiter bzw. Bediener erfolgen. Es kann so eine Erhöhung der Produktivität durch die Reduzierung von organisatorischen Stillständen erreicht werden. Insbesondere ist vorgesehen, eine Übertragung und/oder Anzeige der für die Produktion oder eines Auftragswechsels erforderlichen Aufgaben (Tätigkeiten, Arbeitsaufgaben, manuelle oder automatische Prozesse, Hilfstätigkeiten) auf mindestens ein mobiles Bedien- und Anzeigegerät z. B. Smartphone, Tablet oder Datenbrille vorzunehmen. Es kann aber auch eine Mehrzahl von bevorzugt auch untereinander kommunizierenden Bedieneinheiten im Verarbeitungsmaschinensystem integriert sein bzw. an der Verarbeitungs- und/oder Weiterverarbeitungsmaschine zum Einsatz kommen.

Ein Verarbeitungsmaschinensystem, insbesondere mit einer Produktionsanlage bzw. mit mindestens einer Verarbeitungsmaschine und/oder mindestens einer Weiterverarbeitungsmaschine, beispielsweise wie oben beschrieben, weist mindestens eine mobile Bedieneinheit, beispielsweise ein Tablet oder bevorzugt ein Smartphone, auf. Die mindestens eine mobile Bedieneinheit kann eine Bedieneinheit einer oder mehrerer Verarbeitungsmaschinen und/oder einer oder mehrerer Weiterverarbeitungsmaschinen und/oder für Material, insbesondere Verbrauchsmaterial, sein. Es können auch mehrere solcher auch unterschiedliche Bedienfunktionen umfassende Bedieneinheiten im Verarbeitungsmaschinensystem vorgesehen sein. Die eine oder auch mehrere mobile Bedieneinheiten weisen jeweils einen aufladbaren Energiespeicher, insbesondere jeweils einen Akkumulator kurz Akku, auf. Entsprechend weist das Verarbeitungsmaschinensystem, insbesondere eine, mehrere oder alle Verarbeitungsmaschinen und/oder eine, mehrere oder alle Weiterverarbeitungsmaschinen mindestens eine Ladestelle für den Energiespeicher, insbesondere Akku, der mindestens einen mobilen Bedieneinheit auf. Der Ladestelle wird insbesondere ein Ladegerät bzw. eine Ladestation für die mindestens eine mobile Bedieneinheit zugeordnet. Bevorzugt kann die Ladestelle eine Bedienstelle oder Hauptbedienstelle einer Verarbeitungsmaschine oder Weiterverarbeitungsmaschine sein, wobei die mobile Bedieneinheit durch das in der Ladestelle bzw. Bedienstelle integrierte Ladegerät während der Nutzung automatisch, ohne zusätzliches Handling, geladen werden kann.

Besonders bevorzugt kann die Ladestelle zum kabelfreien und/oder induktiven Laden eines Akkus der einen, mehrerer oder aller mobilen Bedieneinheiten des Verarbeitungsmaschinensystems ausgebildet sein. Beispielsweise kann die Ladestelle eine Fixiereinrichtung für eine mobile Bedieneinheit umfassen, so dass die mobile Bedieneinheit der Ladestelle beispielsweise kraft- und/oder formschlüssig dauerhaft zugeordnet werden kann. Beispielsweise kann das Ladegerät z. B. unter bzw. in der Bedienstelle integriert bzw. fest installiert sein, in der das mobile Gerät (z. B. Smartphone oder Tablet) zum Zwecke der Bedienung zweitweise befestigt oder abgelegt wird. Die Ladestelle bzw. das Ladegerät kann beispielsweise in eine Ablagefläche für die mobile Bedieneinheit integriert sein, welche insbesondere logistische Zwecke und/oder Aufbewahrungszwecke hat. Insbesondere kann dabei die Ladestelle eine Ablagefläche für die mobile Bedieneinheit an einer zentralen Bedienstelle oder einem Leitstand einer Verarbeitungsmaschine oder Weiterverarbeitungsmaschine sein. Dabei wird die Ladestation in der Ablagefläche z. B. an der zentralen Bedienstelle, insbesondere dem Leitstand, beispielsweise unsichtbar integriert.

Bei Zuordnung der jeweiligen mobilen Bedieneinheit, beispielsweise eines Tablets oder bevorzugt eines Smartphones, zu einer Ladestelle wird der Energiespeicher, insbesondere Akku, der mindestens einen mobilen Bedieneinheit durch die Ladestelle des Verarbeitungsmaschinensystems, der Verarbeitungsmaschine bzw. der Weiterverarbeitungsmaschine aufgeladen. Insbesondere wird die mobile Bedieneinheit an der Bedienstelle der Verarbeitungsmaschine, der Weiterverarbeitungsmaschine oder einem Leitstand abgelegt und dabei bevorzugt automatisch bzw. kabellos durch die Ladestelle geladen. Besonders bevorzugt erfolgt der Ladevorgang ohne zusätzliches Handling automatisch bzw. wird der Ladevorgang automatisch gestartet. Damit wird ein einfaches Verfahren zum Aufladen und/oder Nachladen der mobilen Bedieneinheiten durch die Ausstattung der Bedienstellen mit kontaktlosen induktiven Ladegeräten, z. B. Ql (als Standard des Wireless Power Consortiums zur drahtlosen Energieübertragung mittels elektromagnetischer Induktion über kurze Distanzen) erzielt. Mehrere mobile Bedieneinheiten können an einer Ladestelle des Verarbeitungsmaschinensystems, der Verarbeitungsmaschine bzw. der Weiterverarbeitungsmaschine seriell, d. h. nacheinander, oder an mehreren Ladestellen des Verarbeitungsmaschinensystems, einer Verarbeitungsmaschine und/oder einer Weiterverarbeitungsmaschine parallel, d. h. zumindest teilweise gleichzeitig, aufgeladen werden.

Dabei kann auch eine Laderoutine hinterlegt sein, die den Ladevorgang parameterabhängig steuert. Beispielsweise kann der Ladevorgang abhängig vom Ladezustand und/oder von der zu erwartenden Verweildauer bzw. Lagedauer der mobilen Bedieneinheit durchgeführt werden. Die zu erwartende Verweildauer der mobilen Bedieneinheit kann beispielweise durch den aktivierten Bedienumfang der Bedieneinheit, den konkreten Ort der Ablagefläche und/oder durch beispielsweise manuelle Vorgabe bestimmt werden. Mit einer solchen Laderoutine können insbesondere Akku - schonende Ladevorgänge durchgeführt werden. Eine solche Laderoutine kann beispielsweise in einer mit der Ladestelle zusammenwirkenden Steuereinrichtung, beispielsweise der Maschinensteuerung, hinterlegt sein. Der Ladezustand der mobilen Bedieneinheiten kann somit der Steuereinrichtung auch für andere Zwecke bekannt sein.

Durch eine oder mehrere solcher Ladestellen im Verarbeitungsmaschinensystem, beispielsweise einem Drucksaal, kann eine oder können auch mehrere mobile Bedieneinheiten des Verarbeitungsmaschinensystems aufgeladen werden. Vorteilhaft kann ein Anstecken an ein Netzteil entfallen, womit kein Verschleiß an Stecker bzw. Buchse der mobilen Bedieneinheit auftreten kann. Das Handling wird weiter vereinfacht. Damit wird insbesondere die Verfügbarkeit bzw. die Nutzungsdauer von mobilen Geräten bzw. Bedieneinheiten im Verarbeitungsmaschinensystem erhöht, der Verschleiß reduziert bzw. das Handling mit mobilen Bedieneinheiten vereinfacht.

Besonders bevorzugt umfasst ein oder das Verarbeitungsmaschinensystem eine Optimierung der Prozesse zur Herstellung eines Produktes im Betrieb mit mehreren Maschinen, bevorzugt mindestens einer Druckmaschine, insbesondere Bogendruckmaschine, und einer Weiterverarbeitungsmaschine, z. B. Stanze, Klebemaschine, usw.. Insbesondere ist eine Anzeige der zu erledigenden Aufgaben auf einer mobilen Bedieneinheit, die mit einer Produktionsmaschine und/oder einem Produktionssteuerungssystem (Management-Informationssystem (MIS), Branchensoftware, o. ä.) verbunden ist, vorgesehen. Bevorzugt werden ergänzende Informationen angezeigt, z. B. beim Nachfüllen einer Flüssigkeit, wie lange der aktuelle Füllstand noch reicht oder wann voraussichtlich das nächste Mal nachgefüllt werden muss und/oder wie groß der Bestand im Materiallagersystem ist. Beispielsweise kann angezeigt werden, dass ein letzter Kanister aus einem Handlager verwendet wurde.

Beispielsweise weist das Verarbeitungsmaschinensystem mindestens ein oder bevorzugt eine Mehrzahl von stoffgebundenen Merkmalen auf. Stoffgebunden heißt, dass das Merkmal verkörpert im Verarbeitungsmaschinensystem angeordnet ist. Ein Merkmal kann ein optisches und/oder elektronisch unterstütztes Merkmal sein, welches im Verarbeitungsmaschinensystem angeordnet ist. Das stoffgebundene Merkmal kann dabei beispielsweise ortsgebunden, maschinengebunden und/oder verbrauchsmaterialgebunden angeordnet sein. Das stoffgebundene Merkmal kann dabei eine Oberfläche oder ein Objekt an einer Oberfläche sein. Bevorzugt kann das stoffgebundene Merkmal eine Oberfläche eines Verbrauchsmaterials, einer Maschine oder einer Weiterverarbeitungsmaschine oder ein Objekt an einer Oberfläche eines Verbrauchsmaterials, einer Maschine oder einer Weiterverarbeitungsmaschine sein. Insbesondere weist ein stoffgebundenes Merkmal einen Code auf oder enthält einen solchen. Dabei enthält das stoffgebundene Merkmal insbesondere einen eineindeutigen Identifikationscode. Beispielsweise kann das stoffgebundene Merkmal Muster, Buchstaben und/oder Zahlen aufweisen oder enthalten. Beispielsweise kann das Merkmal einen Identifikationscode enthalten, der bevorzugt eindeutig einem Ort oder einer Stelle und/oder einem Verbrauchsmaterial zugeordnet ist. In bevorzugter Ausführungsform ist das Merkmal ein Tag, insbesondere ein RFID-Tag oder besonders bevorzugt ein NFC-Tag. Das stoffgebundene Merkmal kann insbesondere durch die mobile Bedieneinheit erfasst und durch Identifizierung erkannt werden. Beispielsweise kann die mobile Bedieneinheit eine NFC-Schnittstelle aufweisen, um einen jeweiligen NFC-Tag elektromagnetisch anzusprechen. Nach Identifizierung des konkreten NFC-Tags können Daten über die mobile Bedieneinheit angezeigt und/oder geändert werden, wobei diese Daten über den konkret erkannten NFC-Tag zugeordnet werden oder wobei die Daten direkt auf dem konkreten NFC-Tag gespeichert sind.

Insbesondere ist zur Bestätigung einer Bedienhandlung bzw. einer Tätigkeit oder eines einzelnen Schrittes z. B. an der Verbrauchstelle ein stoffgebundenes Merkmal, bevorzugt ein Tag, insbesondere ein RFID-Tag oder ein NFC-Tag, ergonomisch einfach erreichbar angebracht, mit welchem die zu erledigende Tätigkeit bestätigt wird. Dabei kann der Bediener die Aufgabe nur bestätigen, wenn er den Ort der Bedienhandlung bzw. Tätigkeit besucht hat. Besonders vorteilhaft werden die Bedienhandlungen bzw. Tätigkeiten oder Prozesse an einen Leitstand und/oder ein übergeordnetes System, bspw. Datenverwaltungseinrichtung, gemeldet und/oder zum Zwecke der Auswertung gespeichert. Insbesondere ist vorgesehen, dass die Aufgaben, die an der mobilen Bedieneinheit z. B. maschinenbezogen angezeigt werden, an der Bedieneinheit oder im übergeordneten System eingestellt werden. Eine differenzierte Eingabemöglichkeit kann beispielsweise für einen Maschinenbediener oder einen Helfer oder auch für bestimmte Bediener bzw. Helfer vorgesehen sein. Besonders bevorzugt steht die mobile Bedieneinheit drahtlos über eine Datenverbindung mit einer Maschine beispielsweise zu deren Steuerung in Verbindung. Es kann alternativ oder zusätzlich aber auch eine drahtlose Datenverbindung mit einem übergeordneten Rechner, bspw. Datenverwaltungseinrichtung, bestehen. Beispielsweise können an der mobilen Bedieneinheit Daten zum betroffenen Produkt und/oder Bestandsdaten (Bestand aktuell, Mindestbestand) angezeigt werden. Insbesondere kann zum betroffenen Produkt angezeigt werden, wann das nächste Mal bearbeitet bzw. eingegriffen bspw. nachgefüllt werden muss. Es können auch Restmengen und/oder Reichweiten angezeigt werden (z. B. wie groß ist die benötigte Menge bspw. einer Sonderfarbe bis zum Ende des Arbeitsganges und/oder Auftrages).

Vorteilhaft kann dabei eine Optimierung der Produktionsabläufe im Verarbeitungsmaschinensystem insbesondere im Sinne von "Lean Production" erzielt werden. Neben einer Erhöhung der Produktivität kann auch eine Verringerung bzw. Verhinderung von Stillstandszeiten erlangt werden. Weiterhin wird eine sichere Information beteiligter Personen durch die jeweilige mobile Bedieneinheit sichergestellt, beispielsweise bei einer immer am Mann getragenen Bedieneinheit, insbesondere einem Smartphone.

Ein Verarbeitungsmaschinensystem, beispielsweise wie oben beschrieben, kann eine oder mehrere Verarbeitungsmaschinen und/oder eine oder mehrere Weiterverarbeitungsmaschinen enthalten. Eine Verarbeitungsmaschine kann dabei eine bogenverarbeitende Maschine oder eine Druckmaschine sein. Beispielsweise kann eine bogenverarbeitende Maschine eine Bogendruckmaschine, speziell eine Bogenoffsetrotationsdruckmaschine, bevorzugt in Aggregat- und Reihenbauweise sein. Eine Verarbeitungsmaschine kann aber auch im Hoch- oder Tiefdruck oder in einem Non-Impact-Verfahren arbeiten und/oder rollenförmige Bedruckstoffe verarbeiten. Eine Weiterverarbeitungsmaschine kann beispielsweise eine Stanzmaschine, beispielsweise eine Rotations- oder Flachbettstanze, eine Falz-, Zusammentrag-, Klebe- oder Faltschachtelklebemaschine o. ä. sein. Das Verarbeitungsmaschinensystem kann dabei eine oder mehrere gleichartige oder verschiedenartige Verarbeitungsmaschinen und/oder eine oder mehrere gleichartige oder verschiedenartige Weiterverarbeitungsmaschinen enthalten.

Das Verarbeitungsmaschinensystem weist insbesondere eine Datenverwaltungseinrichtung auf, welche bevorzugt mit einer oder mehreren Verarbeitungsmaschinen und/oder mit einer oder mehreren Weiterverarbeitungsmaschinen in Verbindung steht. Bevorzugt kann die Datenverwaltungseinrichtung mit mehreren oder allen Maschinen des Verarbeitungsmaschinensystems in Verbindung stehen. Die Verbindung kann dabei beispielsweise über elektrische Leitungen oder auch drahtlos hergestellt werden. Die Datenverwaltungseinrichtung kann auch mit weiteren Maschinen oder Aggregaten außerhalb des Verarbeitungsmaschinensystems in Verbindung stehen. Bevorzugt ist auch mindestens ein Materiallager im Verarbeitungsmaschinensystem integriert und insbesondere die Datenverwaltungseinrichtung mit dem Materiallager verbunden. Die Datenverwaltungseinrichtung kann in Form einer selbständigen Rechnereinheit oder in einer beispielsweise einer Maschine zugeordneten vorhandenen Steuereinrichtung vorgesehen sein. Es können auch mehrere Teileinheiten eine Datenverwaltungseinrichtung bilden. Die Datenverwaltungseinrichtung kann beispielsweise mit einem übergeordneten Steuersystem verbunden sein oder in einem übergeordneten Steuersystem integriert sein und/oder mit einem Prozesssteuer- bzw. - planungssystem zusammenarbeiten. Die Datenverwaltungseinrichtung kann aber auch beispielsweise in einem Leitstand einer Maschine oder in einem Aggregat oder in einem Kontrollsystem, beispielsweise einem Qualitätskontrollsystem, integriert sein.

Das Verarbeitungsmaschinensystem weist mindestens eine mobile Bedieneinheit auf, welche beispielsweise als tragbare eine Anzeigeeinrichtung oder einen Touchscreen aufweisende Bedieneinheit ausgeführt sein kann. Über die Anzeigeeinrichtung oder den Touchscreen sind visuelle Darstellungen von Daten des Verarbeitungsmaschinensystems, insbesondere der Datenverwaltungseinrichtung, möglich. Die Bedieneinheit kann neben der Anzeigeeinrichtung Funktionstasten aufweisen. Über einen Touchscreen oder die Funktionstasten können Funktionen des Verarbeitungsmaschinensystems initiiert bzw. angesteuert bzw. ausgeführt werden. Insbesondere können Daten der Datenverwaltungseinrichtung bearbeitet bzw. verarbeitet bzw. Funktionen initiiert werden. Beispielsweise können Daten der Datenverwaltungseinrichtung angezeigt und/oder geändert oder auch Daten der oder für die Datenverwaltungseinrichtung eingegeben werden. Die Bedieneinheit kann beispielsweise als tragbarer Computer oder als Tablet oder Notebook oder Mobiltelefon ausgebildet sein. Bevorzugt ist die mobile Bedieneinheit als Smartphone ausgebildet. Besonders bevorzugt weist das Verarbeitungsmaschinensystem mehrere mobile Bedieneinheiten auf, welche insbesondere alle als Smartphones ausgeführt sind. Die mobile Bedieneinheit bildet bevorzugt eine körperliche Einheit, kann aber auch einzelne Funktionseinheiten aufweisen.

Die mindestens eine mobile Bedieneinheit des Verarbeitungsmaschinensystems kann personenungebunden oder auch personengebunden genutzt werden. Eine personenungebundene Bedieneinheit kann beispielsweise durch eine Anmeldung des entsprechenden Bedieners nur zeitweilig von diesem genutzt werden, wobei anschießend bei Anmeldung eines anderen Bedieners dieser dieselbe Bedieneinheit nutzen kann. Eine Bedieneinheit kann beispielsweise auch maschinengebunden genutzt werden. Bei einer personenungebundener Bedieneinheit können unterschiedliche Bedienfunktionen freigeschalten oder gesperrt werden. Die Funktionsfreigabe kann auch parametriert und/oder geändert werden. Die Funktionsfreigabe kann beispielsweise in Verbindung mit der konkreten Anmeldung eines Bedieners vorgenommen werden. Es können alternativ oder zusätzlich aber auch eine oder mehrere personengebundene Bedieneinheiten Verwendung finden. Dabei können die Bedieneinheiten zumindest zeitweilig einem Bediener zugewiesen oder zugeordnet sein, welcher die Bedieneinheit mit der hinterlegten Funktionsfreigabe über die Dauer der Zuweisung oder Zuordnung nutzen kann. Beispielsweise kann jeder berechtigte Bediener und/oder auch Hilfskräfte mittels einer mobilen Bedieneinheit, insbesondere einem Smartphone, ausgestattet werden. Daten hierüber können beispielsweise in der jeweiligen Bedieneinheit und/oder in der Datenverwaltungseinrichtung hinterlegt sein.

Die mindestens eine mobile Bedieneinheit des Verarbeitungsmaschinensystems kann zur Beeinflussung von Daten von Verbrauchsmaterial des Verarbeitungsmaschinensystems genutzt werden. Dabei können beispielsweise Daten betreffend das Verbrauchsmaterial der Datenverwaltungseinrichtung insbesondere angezeigt, geändert, eingegeben und/oder weitergeleitet werden. Bei mehreren Bedieneinheiten kann auch ein paralleler Zugriff auf Daten der Datenverwaltungseinrichtung erfolgen. Bevorzugt erfolgt eine zentrale Verwaltung der Daten betreffend des Verbrauchsmaterials einer oder mehrerer bevorzugt aller Maschinen und/oder Weiterverarbeitungsmaschinen und/oder eines oder mehrerer Materiallager. Dabei können auch Daten gruppenweise und/oder personengebunden und/oder maschinengebunden verwaltet werden. Die Datenverwaltungseinrichtung kann beispielsweise mit weiteren Systemen kommunizieren, beispielsweise mit externen Systemen. Es kann dabei vorgesehen sein, Daten weiterzuleiten und/oder mit einer verbundenen Einheit Daten auszutauschen. Beispielsweise kann eine Verbindung mit einem Hersteller zur beispielsweise automatisierten Nachlieferung von Verbrauchsmaterial aufgebaut werden.

Als Verbrauchsmaterial können beispielsweise zu verarbeitende und/oder verarbeitete Gebinde oder Stoffe an einer Verarbeitungsmaschine und/oder einer Weiterverarbeitungsmaschine zählen. Insbesondere können Mengen, Parameter, Merkmale und/oder Zusatzinformationen von einzelnen oder gestapelten Bogen einer bogenverarbeitenden Maschine oder von bogen- oder rollenförmigen Bedruckstoffen an einer Druckmaschine als Verbrauchsmaterial in der Datenverwaltungseinrichtung hinterlegt sein. Insbesondere kann aber auch das von einer Verarbeitungsmaschine und/oder einer Weiterverarbeitungsmaschine während deren Betrieb verbrauchte Material, welches beispielsweise in einem Materiallager vorgehalten wird, als Verbrauchsmaterial angesehen werden. Als Verbrauchsmaterial kann beispielsweise an einer bogenverarbeitenden Maschine, insbesondere einer Bogendruckmaschine, verstanden werden: Druckplatten, Farbe, Farbdosen, Feuchtmittelzusätze, Gummitücher, Heißprägefolie, IPA (Isopropylalkohol), Kaltfolie, Kleber, Lack, Rackellippen, Reiniger, Skalenfarben, Sonderfarben, Unterlagefolie, Waschmittel, Wasserglätter u. ä.. Weiter können in der Datenverwaltungseinrichtung Daten über zugehöriges Verbrauchsmaterial, insbesondere regelmäßig oder anlassbezogen zu wechselndes Material, beispielsweise benötigte Walzen, insbesondere Rasterwalzen, o. ä. hinterlegt sein. Weiter können Daten über Wartungsarbeiten und/oder Standzeiten von Verbrauchsmaterialien, insbesondere von zu wechselnden Materialien, hinterlegt sein. Beispielsweise können detaillierte Daten über Austausch- und Wechselvorgänge hinterlegt sein. Insbesondere können Daten über erfolgte und/oder erwartete Wartungsarbeiten, beispielsweise über Walzenwechsel, hinterlegt sein.

Die in der Datenverwaltungseinrichtung hinterlegten Daten können beispielsweise mit weiteren Daten verknüpft abgelegt und/oder verarbeitet werden. Bevorzugt ist es vorgesehen, die Daten des Verbrauchsmaterials mit Daten über gebrauchte und/oder vorrätige Mengen in Verbindung zu setzen. Daten des Verbrauchsmaterials können auch aggregatbezogen, maschinenbezogen und/oder verarbeitungssystembezogen oder auch auftragsbezogen hinterlegt sein. Daten des Verbrauchsmaterials können auch insbesondere abhängig von Randbedingungen an weitere Steuersysteme innerhalb und/oder außerhalb des Verarbeitungsmaschinensystems weitergeleitet werden. Die Datenverwaltungseinrichtung kann dafür unter anderem mit einzelnen Aggregaten, einzelnen oder einer Mehrzahl von Maschinen und/oder Weiterverarbeitungsmaschinen und/oder Leitständen oder auch Vorstufensystemen oder weiteren Weiterverarbeitungssystemen in Verbindung stehen.

Die Daten über das Verbrauchsmaterial, insbesondere über Verbrauchsstoffe und/oder über Bedruckstoffe, können auch Zusatzinformationen enthalten. Es kann beispielsweise hinterlegt werden, ob die Verbrauchsmaterialien auch teilweise entnehmbar sind oder ob eine Teilentnahme möglich oder unmöglich ist. In der Datenverwaltungseinrichtung können auch Daten betreffend das Verbrauchsmaterial hinterlegt werden. Insbesondere kann hinterlegt sein, wie und/oder wo die Daten angezeigt, geändert und/oder eingegeben werden können bzw. wurden. Es kann dabei beispielsweise eine Eingabe der Daten über einen Code, beispielsweise einen Datamatrixcode, eine Handeingabe, eine Übernahme aus anderen Systemen, eine Eingabe über Schnittstellen usw. ermöglicht bzw. erlaubt bzw. vorgegeben werden. Dabei kann auch eine Plausibilitätskontrolle und/oder eine Berechtigungskontrolle vorgenommen werden.

Ein oder das Verarbeitungsmaschinensystem enthält insbesondere eine mobile Bedieneinheit, über die Daten über mindestens ein Verbrauchsmaterial einer Recheneinheit bzw. Datenverwaltungseinrichtung zur Verfügung stellbar, insbesondere anzeigbar bzw. darstellbar bzw. visualisierbar, sind. Die Daten können über die mobile Bedieneinheit generell optisch, akustisch und/oder mechanisch, beispielsweise über einen Vibrationsalarm, zur Verfügung gestellt werden. Mittels der Bedieneinheit sind beispielsweise derartige Daten darstellbar, wenn der Datenverwaltungseinrichtung über die Bedieneinheit Informationen über ein Verbrauchsmaterial bekanntgegeben werden bzw. ein stoffgebundenes Merkmal durch die Bedieneinheit erkannt und Informationen hierüber übermittelt werden. Beispielsweise über eine Eingabe verbrauchsmaterialzugehöriger Informationen an der Bedieneinheit oder eine sensorische Erfassung eines stoffgebundenen Merkmales, insbesondere eines Tags, durch die Bedieneinheit können Daten auch zu ortsgebundenen Verbrauchsmaterialien angezeigt werden. Weiterbildend kann eine Bestimmung des Ortes der mobilen Bedieneinheit durch Erfassen eines der Stelle zugeordneten stoffgebundenen Merkmals, insbesondere eines Tags, durch die Bedieneinheit erfolgen. Bevorzugt erfolgt eine Erfassung des verbrauchsmaterialzugehörigen Ortes der Bedieneinheit mittels Near Field Communication (NFC). Besonders bevorzugt erfolgt eine Anbringung eines NFC-Tags an einer Verbrauchsmaterial betreffenden oder aufweisenden Stelle des Verarbeitungsmaschinensystems, beispielsweise direkt an einem Verbrauchsmaterial, einer Verarbeitungsmaschine und/oder einer Weiterverarbeitungsmaschine. Alternativ kann eine Erfassung des verbrauchsmaterialrelevanten Ortes mittels Radio Frequency Identification (RFID) über RFID-Tags erfolgen. Besonders vorteilhaft kann eine Bestimmung des verbrauchsmaterialrelevanten Ortes bei Erkennung des erfassten stoffgebundenen Merkmals ohne viel Aufwand in kürzester Zeit erfolgen. Eine direkte Ortserfassung bzw. Ortsbestimmung mittels Global Positioning System (GPS), Global System for Mobile Communications (GSM), Universal Mobile Telecommunications System (UMTS), Bluetooth und/oder ein Wireless Local Area Network (WLAN) braucht nicht zu erfolgen.

Bevorzugt ist einem Ort des Verarbeitungsmaschinensystems ein Tag derart zugeordnet, dass dieser von der mobilen Bedieneinheit beispielsweise mittels Nahfeldkommunikation (Near Field Communication NFC) ausgelesen werden kann. Die Nahfeldkommunikation (NFC) ist insbesondere ein auf der RFID-Technik basierender internationaler Übertragungsstandard zum kontaktlosen Austausch von Daten per elektromagnetischer Induktion mittels loser gekoppelter Spulen über kurze Strecken von wenigen Zentimetern. Es kann dabei eine Datenübertragungsrate von beispielsweise bis zu 424 kBit/s erzielt werden. Alternative Datenübertragungsmöglichkeiten sind ebenfalls einsetzbar. Generell kann der Tag Teil der Datenverwaltungseinrichtung sein bzw. Daten insbesondere des Verbrauchsmaterials enthalten. Damit können Daten insbesondere über ein Verbrauchsmaterial generell dem Tag, der Bedieneinheit und/oder der Datenverwaltungseinrichtung zugeordnet sein. Bevorzugt wird aber vom Tag ein Code bzw. ein Identifikationscode bzw. -merkmal, beispielsweise ein Muster und/oder eine Buchstaben- und/oder Zahlenkombination oder auch ein oder mehrere Verbindungsinformationen bzw. Links, gespeichert. Diese Information kann insbesondere über die NFC-Technologie von der mobilen Bedieneinheit erfasst bzw. ausgelesen bzw. ermittelt werden. Bevorzugt wird durch die Informationsaufnahme durch die mobile Bedieneinheit das erfasste stoffgebundene Merkmal, insbesondere der Tag, identifiziert und erkannt bzw. werden die Verbindungsinformationen bzw. Links aktiviert bzw. umgesetzt.

Von der mobilen Bedieneinheit ggf. in Verbindung mit der Datenverwaltungseinrichtung können die beispielsweise auch mit einer eine Stelle bzw. einem Ort verknüpften Daten von Verbrauchsmaterial und/oder einer Bedienhandlung ermittelt werden. Bevorzugt stellt die Datenverwaltungseinrichtung der mobilen Bedieneinheit die Daten über ein oder mehrere Verbrauchsmaterialen und/oder die Bedienhandlung an der betreffenden Stelle zur Verfügung. Damit kann der Bediener an der vorgegebenen bzw. vorgebbaren Stelle über die mobile Bedieneinheit über die Daten des zugeordneten Verbrauchsmaterials bzw. der Bedienhandlung verfügen. Insbesondere können die Daten durch die mobile Bedieneinheit angezeigt werden. Beispielsweise werden dem Bediener über die mobile Bedieneinheit die Art des Verbrauchsmaterials, die vorhandene Materialmenge, die auftragsbezogen vorgesehene Menge usw. angezeigt. Dabei kann die Anzeige der Daten separat oder gemeinsam direkt oder nach Betätigung eines Bedienelementes der Bedieneinheit erfolgen. Insbesondere kann der Materialbestand beispielsweise in einem Materiallager betreffend des an der Stelle erforderlichen Verbrauchsmaterials angezeigt werden.

Beispielsweise bei einer Erneuerung bzw. einem Nachfüllen oder einem Wechsel eines Verbrauchsmaterials kann über die mobile Bedieneinheit eine Änderung der Daten über das betreffende Verbrauchsmaterial vorgenommen werden. Dabei kann beispielsweise durch entsprechende Bedienhandlung bzw. Eingabe an der mobilen Bedieneinheit Einfluss auf die Daten des Verbrauchsmaterials der Datenverwaltungseinrichtung genommen werden. Beispielsweise kann die Menge des eingesetzten Verbrauchsmaterials, insbesondere Verbrauchsstoffe bzw. Bedruckstoffe, eingegeben und damit die Daten der Datenverwaltungseinrichtung geändert werden. Bei definierten Nachfüllmengen kann auch eine einfache Bestätigung über die mobile Bedieneinheit ausreichen, bspw. über Betätigung eines Bedienelementes oder über erneutes Erkennen eines stoffgebundenen Merkmals, insbesondere des Tags. Beispielsweise kann von der Datenverwaltungseinrichtung mit den eingegebenen Daten die Verwaltung eines Materiallagers vorgenommen werden. Die Daten können entsprechend aktualisiert bzw. überprüft werden. Dabei kann auch ein Abgleich mit weiteren Systemen vorgenommen werden, ein Kontrollsystem einbezogen werden und/oder Grenzwerte überwacht werden. Beispielsweise kann bei Übermittlung eines Einsatzes eines bestimmten Verbrauchsmaterials und/oder einer Menge von Verbrauchsmaterial eine Verringerung des Materialbestandes qualitativ oder quantitativ bestimmt werden. Die Daten der Datenverwaltungseinrichtung bezüglich des Verbrauchsmaterials können aktualisiert bzw. überschrieben werden. Es kann dabei auch eine Protokollierung vorgenommen werden. Beispielsweise kann erfasst werden wer, wann, wo, wie, wieviel, in welcher Zeit für welchen Zweck, für welchen Job usw. Verbrauchsmaterial nutzt. Eine Auswertung des entnommenen Verbrauchsmaterials kann insbesondere auch maschinen-, auftrags- und/oder jobabhängig erfolgen.

Beispielsweise kann von der mobilen Bedieneinheit ein stoffgebundenes Merkmal erfasst, insbesondere ein Code bzw. eine Identifizierung eines Tags erkannt werden, und dies weiterhin dafür genutzt werden, den an der betreffenden Stelle erforderlichen Funktionsumfang der mobilen Bedieneinheit ggf. unter Beachtung personengebundener Freigaben bzw. Sperrungen zu verändern. So können die Anzeigemöglichkeiten und/oder die Eingabemöglichen der mobilen Bedieneinheit beeinflusst werden. Beispielsweise können die an der mobilen Bedieneinheit anwählbaren Funktion beispielsweise auf das konkrete Verbrauchsmaterial eingeschränkt und/oder an die ermittelte Stelle der Bedieneinheit angepasst werden. Auch eine Anpassung des Funktionsumfanges an eine beispielsweise mit einem stoffgebundenen Merkmal, insbesondere NFC-Tag, versehene Verarbeitungsmaschine bzw. Weiterverarbeitungsmaschine kann erfolgen.

Weiterhin kann die mobile Bedieneinheit auch mit einer Maschine, beispielsweise einer bogenverarbeitenden Maschine, beispielsweise über eine Steuereinrichtung, insbesondere einen Leitstand, bzw. die Maschinensteuerung in Verbindung treten. Es kann damit eine Anzeige von maschinenrelevanten, prozessrelevanten und/oder verbrauchsmaterialrelevanten Daten und/oder eine Steuerung von Aggregaten bzw. der Maschine über die mobile Bedieneinheit erfolgen. Es kann dabei in der Regel nachrangig ebenfalls eine Ortsbestimmung der mobilen Bedieneinheit für die Prozessführung durchgeführt werden, beispielsweise wie oben beschrieben. Besonders bevorzugt kann ebenfalls über an der Maschine angebrachte Tags, insbesondere NFC-Tags, die betreffende Stelle, beispielsweise über NFC-Technologie, ermittelt und entsprechend die mobile Bedieneinheit in die Maschinensteuerung eingebunden werden. Dabei kann die mobile Bedieneinheit sowohl mit der Datenverwaltungseinrichtung als auch mit einer Maschinensteuerung oder einer anderen Steuerung drahtlos kommunizieren. Die Maschinensteuerung kann auch mit der Datenverwaltungseinrichtung zusammenarbeiten bzw. in dieser integriert sein. Beispielsweise kann eine weitere Funktion der mobilen Bedieneinheit das Anzeigen von insbesondere maschinenbezogenen Wartungsintervallen, Bedienungsanleitungen, Reparaturanleitungen und/oder Bestellvorlagen für Material, Verbrauchsmaterial und/oder Verarbeitungsmaterial sein. Es kann alternativ oder zusätzlich auch ein Ersatzteilkatalog über die mobile Bedieneinheit anzeigbar bzw. anwählbar sein.

Beispielsweise kann eine einfache ereignisgesteuerte Navigation in komplexen Menüstrukturen unter Zuhilfenahme einer mobilen Bedieneinheit zur Maschinenbedienung und/oder Informationsanzeige erfolgen. Wenn beispielsweise im Rahmen eines Auftragswechsels an einer Bogendruckmaschine das Format geändert bzw. verstellt wurde muss ein Helfer am Anleger einen neuen Bedruckstoffstapel in Arbeitsposition bringen. Dies kann ereignisgesteuert dem Bediener über die mobile Bedieneinheit beispielsweise in einem Untermenü angezeigt werden, wobei auch der Fortschritt des Jobwechsels visualisiert sein kann. Bevorzugt erfolgt die Information auch nur dann, wenn für die Maschine bzw. den Stapel auch wirklich etwas zu erledigen ist. Damit handelt es sich um eine im Rüstprozess hilfreiche "smarte" Anzeige. Es können weitere Hilfsmenüs und ausreichende Erklärungen für den Bediener über die mobile Bedieneinheit zur Verfügung gestellt werden. Bevorzugt erfolgt dabei eine Nutzung von mobilen Kommunikationsgeräten, wie z. B. einem Tablet oder einem Smartphone, die über ein Netzwerk z. B. Webserver drahtlos mit der Steuerung einer Maschine, einer Anlage und/oder der Datenverwaltungseinrichtung bzw. einem Produktionssteuersystem kommunizieren, wobei weiterbildend die Navigation im Bedienmenü durch Meldungen (Daten) gesteuert beeinflusst wird, die an die mobile Bedieneinheit gesendet werden.

Beispielsweise kann im Verarbeitungsmaschinensystem auch eine Druckmaschine oder Stanze mit einer Steuerung und mindestens einem ortsfesten Bediengerät und mindestens einer mobilen Bedieneinheit vorgesehen sein, welche mehr als ein Bedienmenü oder Anzeigemenü hat, wobei die mobile Bedieneinheit über eine Datenschnittstelle mit der Steuerung der Druckmaschine (SPS, Leitstand, Bediengerät, usw.) verbunden ist und Daten zwischen der mobilen Bedieneinheit und der Steuerung austauscht. Meldungen und/oder Ereignisse können dabei an die mobile Bedieneinheit gesendet werden, wobei in der Meldung vorteilhaft auch das Zielmenü mit übertragen werden kann, welches mit der Meldung oder dem Ereignis verknüpft ist. Weiter kann an der mobilen Bedieneinheit eine Liste hinterlegt sein, in welcher eine Verbindung der Meldung mit einem anzuzeigenden Zielmenü hinterlegt ist. Insbesondere kann das Zielmenü automatisch an der mobilen Bedieneinheit aufgerufen werden. Durch den Aufruf des mit einer Meldung verbundenen Zielmenüs kann vorteilhafterweise mindestens ein Tastendruck eingespart werden, was eine Vereinfachung der Bedienung ermöglicht. Ein Zielmenü kann beispielsweise über eine Verbindungsinformation, beispielsweise einen Link, angewählt oder angesteuert werden. Ein Link kann dabei in Verbindung mit einem Tag übertragen oder angewählt werden oder es kann ein im Tag hinterlegter Link direkt durch Erkennen des Tags durch die mobile Bedieneinheit an die mobile Bedieneinheit übertragen bzw. von dieser ausgeführt werden.

Beispielsweise wird weiter eine Nutzung einfacher Datenerfassungsgeräte ermöglicht, die mit einfachen und kostengünstigen Mitteln mit einer Steuerung einer Produktionsmaschine verbunden werden können. Insbesondere wird eine sichere Erfassung von Produktionszusatzstoffen geschaffen. Dabei kann die Nutzung von mindestens einer mobilen Bedieneinheit, insbesondere eines mobilen Kommunikationsgerätes, z. B. eines Tablets oder eines Smartphones, welche über ein Netzwerk z. B. Webserver mit der Steuerung der Maschine, Anlage und/oder der Datenverwaltungseinrichtung kommuniziert, vorgesehen sein. Die mobile Bedieneinheit kann insbesondere auch drahtlos z. B. mit einer Maschinensteuerung kommunizieren. Eine Verwendung der mobilen Bedieneinheit zur Identifizierung von Verbrauchsmaterialien kann beispielsweise durch ein Sensorsystem, insbesondere eine Kamera, z. B. durch einscannen von aufgebrachten Codes usw., erfolgen. Ein Sensorsystem der mobilen Bedieneinheit wird entsprechend zur Aufnahme von Daten betreffend Verbrauchsmaterial des Verarbeitungsmaschinensystems eingesetzt.

Es kann beispielsweise eine Kamera der mobilen Bedieneinheit auch zum Scannen von Codes beispielsweise eines Verbrauchsmaterials bzw. Bedruckstoffes und/oder eines stoffgebundenen Merkmals verwendet werden, wobei auch die Codes von der mobilen Bedieneinheit entschlüsselt werden können. Alternativ können die Codes von der mobilen Bedieneinheit zur Entschlüsselung an einen weiteren Rechner, beispielsweise einen Leitstand oder eine Datenverwaltungseinrichtung, übertragen werden. Insbesondere kann durch eine Positionserkennung beispielsweise über eine Verknüpfung zum stoffgebundenen Merkmal, bevorzugt einen Tag oder einen NFC-Tag, die Verbindung zur Maschine oder zum Aggregat einer Maschine und/oder zu Auftragsdaten automatisch hergestellt werden. Über die ggf. bekannte Position kann auch ein zugehöriges Bedienmenü insbesondere automatisch geöffnet und/oder vorgesehene bzw. benötigte Sensoren, z. B. eine Kamera, insbesondere zum Codescannen beispielsweise einer Farbdose, aktiviert werden. Vorteilhaft sichert dies eine Vereinfachung der Bedienung. Ebenso kann eine sichere Zuordnung zur Maschine oder zum Aggregat durch das stoffgebundene Merkmal, insbesondere einen Tag oder NFC-Tag, erfolgen. Dabei wird besonders bevorzugt die Position über den festgelegten und beispielsweise in der Datenverwaltungseinrichtung hinterlegten Ort des erkannten stoffgebundenen Merkmals, insbesondere Tags oder NFC-Tags, bestimmt. Die Erfassungsgeräte sind weiter vorteilhafterweise kostengünstig.

Beispielsweise kann weiterhin eine Optimierung der Produktionsabläufe bzw. eine Verhinderung von Ausfallzeiten durch z. B. fehlende Verbrauchsmaterialien erzielt werden. Dies kann insbesondere dadurch erreicht werden, dass dem Bediener zusätzliche Informationen, beispielsweise beim Nachfüllen von Verbrauchsstoffen bzw. Verbrauchsmaterial, angezeigt werden. Mit der mobilen Bedieneinheit in Kombination mit einer Markenerfassung, beispielsweise eines Tags oder NFC-Tags, ist eine Datenerfassung bzw. ein Datenhandling von Verbrauchsmaterialien einfach möglich. Durch zusätzliche Informationen zum Verbrauchsmaterial, z. B. wie viel Farbe wird für den Auftrag bis zum Auftragsende noch benötigt, ist ein frühzeitiger Abgleich zwischen der bereitgestellten Menge und dem tatsächlichen Verbrauch in der Produktion möglich. Stillstandszeiten aufgrund fehlender Verbrauchsmaterialien lassen sich so minimieren bzw. verhindern. Die Erfassung von Daten mit mobilen Bedieneinheiten, z. B. Smartphone oder Tablet, kann über die NFC-Technologie in der Nähe des Ortes des Einsatzes des Verbrauchsmaterials vorgenommen werden. Insbesondere erfolgt eine Anbringung von NFC-Tags im Bereich der Verbrauchsstellen und/oder eines Materiallagers in einem Produktionsbetrieb für die Herstellung von Druckprodukten. Insbesondere wird jedem NFC-Tag ein Ort und/oder bevorzugt eine Funktion zugeordnet. Beispielsweise kann eine Erfassung beispielsweise einer Farbdose im ersten Druckwerk einer Bogendruckmaschine mit der Nummer eins erfolgen.

Beispielsweise ist die mobile Bedieneinheit über eine drahtlose Datenverbindung mit dem Steuerungssystem einer Verarbeitungsmaschine und/oder einem Planungssystem einer Druckerei verbunden. Dabei können nach Erfassen eines stoffgebundenen Merkmals, insbesondere des Tags oder NFC-Tags, und dem Erkennen der konkreten Funktion bzw. des relevanten Ortes auf der mobilen Bedieneinheit zusätzliche Informationen angezeigt werden, z. B. Auftragsinformationen, voraussichtlich verbleibende Dauer und/oder die voraussichtliche Menge des Verbrauchsmaterials bis zum Ende des Auftrages und/oder des Arbeitsganges. Beispielsweise kann das Verbrauchsmaterial umfassen: zu bedruckende und/oder teilweise oder vollständig bedruckte Bedruckstoffe bzw. Stapel oder Farbe, Puder, Waschmittel, usw. in einer Bogendruckmaschine und/oder Kleber in einer Faltschachtelklebemaschine. Insbesondere werden nach der Identifikation des stoffgebundenen Merkmals, insbesondere des Tags oder NFC-Tags, die zu dessen "Funktion" zugehörigen ergänzenden Daten aus der Maschinensteuerung, der Produktionsplanung bzw. der Datenverwaltungseinrichtung auf der mobilen Bedieneinheit angezeigt. Dabei können die erfassten Verbrauchsdaten mit den Daten des Druckauftrages (Jobnummer, Bogenzähler, Bediener, usw.) ergänzt werden. Vorteilhafterweise kann so eine Vereinfachung der Bedienung und/oder eine Erhöhung der Produktivität insbesondere durch Verhinderung von Stillstandszeiten erzielt werden.

Beispielsweise ist im Verarbeitungsmaschinensystem eine Verarbeitungsmaschine, insbesondere eine Bogendruckmaschine, vorgesehen. Dieser Verarbeitungsmaschine, insbesondere Bogendruckmaschine, ist mindestens eine und sind bevorzugt mehrere mobile Bedieneinheiten zugeordnet. Zur Funktionsumschaltung der mobilen Bedieneinheiten, insbesondere zur Umschaltung von Bedienmenüs, sind an der Verarbeitungsmaschine, insbesondere Bogendruckmaschine, stoffgebundene Merkmale, insbesondere Tags oder NFC-Tags oder andere Codes, angebracht. Damit kann bevorzugt die Bedienoberfläche der mobilen Bedieneinheit in Abhängigkeit der vom Merkmal, insbesondere Tag, Code usw., erhaltenen Information umgeschaltet werden. Beispielsweise kann eine Kamera der Bedieneinheit zur Aufnahme von Daten, beispielsweise zum Scannen von Codes wie Barcodes, eingeschaltet bzw. verwendet werden. Es können die Codes von der mobilen Bedieneinheit entschlüsselt werden oder Daten, beispielsweise Bilder der Codes, an einen Rechner beispielsweise die Datenverwaltungseinrichtung zur Entschlüsselung gesendet werden. Dabei erfolgt die Kommunikation der mobilen Bedieneinheit drahtlos. Weiterbildend kann die mobile Bedieneinheit mit der Maschinensteuerung der Bogendruckmaschine zur Bedienung und/oder Anzeige kommunizieren.

Besonders bevorzugt werden Daten von NFC-Tags mittels einer NFC-Schnittstelle der mobilen Bedieneinheit durch die mobile Bedieneinheit gelesen. Es ist dabei bevorzugt die Nutzung von mobilen Bedieneinheiten, insbesondere Kommunikationsgeräten (z. B. Tablet oder Smartphone), vorgesehen, die über ein Netzwerk z. B. Webserver drahtlos bevorzugt mit der Steuerung einer Maschine, einer Anlage und/oder der Datenverwaltungseinrichtung kommunizieren. Das Anbringen von stoffgebundenen Merkmalen, insbesondere von Tags (z. B. RFID, NFC), Barcodes, Datamatrixcodes, lokalen Netzwerkverbindungen, usw., erfolgt bevorzugt nach für den Bediener ergonomisch bzw. logischen sinnvollen Positionen (Orten, Funktionen), insbesondere an Verarbeitungsmaschinen, Weiterverarbeitungsmaschinen und/oder Verbrauchsmaterialien.

Durch die Erkennung eines konkreten Tags ggf. an einer konkreten Position wird insbesondere in der mobilen Bedieneinheit das benötigte (im Tag ggf. mit der Datenverwaltungseinrichtung logisch hinterlegte) Bedienmenü angezeigt (bevorzugt ohne die Betätigung eines Bedienelementes). Das heißt insbesondere, dass das mit dem Tag, der an bzw. im Umfeld der Maschine angebracht ist, ein logisch verknüpftes Bedienmenü angezeigt wird, ohne dass dafür eine manuelle Bedienung ausgelöst werden muss. Es ist bevorzugt lediglich die Annäherung der Bedieneinheit oder das Scannen eines Codes notwendig. Damit erfolgt eine einfache Navigation in komplexen Menüstrukturen unter Zuhilfenahme von einfachen mobilen Bedieneinheiten zur Informationsgewinnung bzw. zur Maschinenbedienung, wobei eine mobile Bedieneinheit mit einfachen und kostengünstigen Mitteln mit der Steuerung der Produktionsmaschine verbunden werden kann. Vorteilhaft wird damit eine Vereinfachung der Bedienung und eine schnellere Produktschulung erreicht. Durch eine Reduzierung der fest installierten Bedienelemente bzw. Bediengeräte kann eine Reduzierung der Herstellkosten erzielt werden. Die mobilen Bedieneinheiten sind dabei kostengünstig.

In einem oder dem Verarbeitungsmaschinensystem erfolgt bevorzugt eine Tag-gestützte Datenerfassung, insbesondere eine NFC-Tag-gestützte Datenerfassung, mittels einer oder mehrerer mobiler Bedieneinheiten. Beispielsweise werden dafür an mehreren oder allen Maschinen in der Produktion, insbesondere an allen Verarbeitungsmaschinen und Weiterverarbeitungsmaschinen des Verarbeitungsmaschinensystems, Tags oder NFC-Tags angebracht. Über einen konkreten Tag oder NFC-Tag ist dabei beispielsweise der Ort bzw. die Maschine gespeichert oder über eine Datenverarbeitungseinrichtung, beispielsweise die Datenverwaltungseinrichtung insbesondere ein Produktionssteuerungssystem (PPS) oder ein Management-Informationssystem (MIS), zuordenbar.

Funktionen in der mobilen Bedieneinheit, insbesondere in einem Smartphone, werden bevorzugt mittels der Nahfeldkommunikation (NFC) zwischen NFC-Tag und der NFC-Schnittstelle der mobilen Bedieneinheit gesteuert. So kann z. B. automatisch ein Programm zur Datenerfassung auf der mobilen Bedieneinheit gestartet werden, die Kamera zum Scannen eines Codes beispielsweise einer Stapelkarte aktiviert werden und/oder ein Druck beispielsweise eines Arbeitspapieres (z. B. einer Stapelkarte) angefordert werden.

Auf diese Weise lassen sich Daten insbesondere über einen NFC-Tag von einem Ort bzw. einer Maschine, z. B. einer Stanze, mit den Daten eines Fertigungsloses bzw. eines bedruckten Bedruckstoff- bzw. Bogenstapels verbinden. Die Daten des Fertigungsloses bzw. des bedruckten Stapels können beispielsweise über einen maschinenlesbaren Code, z. B. Barcode, auf einem Arbeitspapier (z. B. auf einer Stapelkarte) oder einen dem Los bzw. Stapel zugeordneten NFC-Tag identifiziert werden. Dabei kann die Verknüpfung bzw. Kombination bzw. ins Verhältnis setzen der Daten auf der mobilen Bedieneinheit und/oder in einem Datenverarbeitungssystem z. B. der Datenverwaltungseinrichtung, insbesondere dem PPS oder dem MIS, erfolgen.

Besonders bevorzugt erfolgt in Verbindung mit einem Produktionssteuerungssystem eine Datenerfassung mithilfe der mindestens einen mobilen Bedieneinheit, wobei bevorzugt eine Steuerung mindestens einer Applikation bzw. eines Programmes auf der mobilen Bedieneinheit durch einen NFC-Tag erfolgt. Im Verarbeitungsmaschinensystems sind dafür mindestens einer Verarbeitungsmaschine, beispielsweise einer Druckmaschine oder einer bogenverarbeitenden Maschine, und einer weiteren Maschine NFC-Tags zugeordnet. Die weitere Maschine kann beispielsweise ebenfalls eine Druckmaschine oder einer bogenverarbeitende Maschine oder eine Weiterverarbeitungsmaschine wie eine Stanzmaschine, eine Klebemaschine, eine Verpackungsmaschine oder eine Stapelmaschine sein.

Die an der Verarbeitungsmaschine und der weiteren Maschine angebrachten NFC-Tags enthalten jeweils die bevorzugt eineindeutigen Identifikationscodes und sind durch eine oder eine jeweilige mobile Bedieneinheit, insbesondere durch ein oder ein jeweiliges Smartphone, bevorzugt ausschließlich durch Annäherung der mobilen Bedieneinheit an den jeweiligen NFC-Tag nach erfassen durch identifizieren erkennbar, insbesondere wie an anderer Stelle beschrieben. Zur Erfassung eines solches NFC-Tags weist eine jeweilige mobile Bedieneinheit eine NFC-Schnittstelle auf. Weiter steht die eine oder auch mehrere der mobilen Bedieneinheiten drahtlos mit der Datenverwaltungseinrichtung, insbesondere dem Produktionssteuersystem (PPS), und/oder einer oder mehreren Maschinensteuerungen in kommunikativer Verbindung. Durch eine mobile Bedieneinheit lassen sich somit insbesondere Daten von einem Leitsystem wie der Datenverwaltungseinrichtung bzw. PPS anzeigen bzw. Daten an das Leitsystem übergeben.

Durch die mobile Bedieneinheit kann auch weiter aus einem identifizierten NFC-Tag beispielsweise auf Ortsdaten und/oder auf Maschinennamen bzw. Maschinenbezeichnungen geschlossen werden. Dabei können die Ortsdaten bzw. die Maschinennamen über den jeweiligen NFC-Tag zugeordnet werden. Beispielsweise kann der Maschinenname direkt auf dem NFC-Tag gespeichert sein oder über eine ID (Identifikationscode) zuordenbar sein. Bevorzugt können damit mithilfe der mobilen Bedieneinheit Ortsdaten bzw. Maschinennamen oder weitere Informationen mit Daten von Fertigungslosen kombiniert werden. Insbesondere wird mit der verbundenen Datenverarbeitung eine Materialzuführung bzw. eine Materialweitergabe unterstützt. Besonders bevorzugt erfolgt zum Zwecke der Datenerfassung an der Verarbeitungsmaschine bzw. an der weiteren Maschine eine Erfassung eines angebrachten NFC-Tags, wodurch bevorzugt automatisch eine Applikationen bzw. ein Programm der mobilen Bedieneinheit gestartet bzw. gesteuert wird. Insbesondere können dabei auf der mobilen Bedieneinheit installierte Applikationen (Apps) bevorzugt ausschließlich durch Annäherung der mobilen Bedieneinheit an den NFC-Tag gestartet bzw. gesteuert werden. Besonders bevorzugt wird dabei eine Kamera zum Scannen aktiviert oder die Ortsdaten bzw. Maschinendaten oder weitere Informationen oder ein oder mehrere Links eines NFC-Tags in der Applikation beispielsweise zur Datenerfassung verwendet.

Damit wird insbesondere ein Verfahren zur einfachen bzw. kostengünstigen Datenerfassung in einer Produktion beispielsweise zum Zweck der Materialverfolgung bereitgestellt. Dies ermöglicht vorteilhafterweise eine Optimierung der Produktionsabläufe insbesondere im Sinne von "Lean Production", eine kostengünstige und einfache Datenerfassung, die Unabhängigkeit von Umwelteinflüssen und/oder den Wegfall von ortsfesten Datenerfassungsstationen. Besonders vorteilhaft können nach einfacher elektromagnetischer Ansprache des jeweiligen NFC-Tags durch die NFC-Schnittstelle der mobilen Bedieneinheit durch den konkreten NFC-Tag der mobilen Bedieneinheit Daten bereitgestellt werden und/oder ein oder mehrere Verbindungsinformationen, beispielsweise Links, zur Verfügung gestellt werden, welche über den konkreten NFC-Tag zugeordnet werden oder welche auf dem NFC-Tag gespeichert sind. Die über die Datenverwaltungseinrichtung und/oder ein Produktionssteuersystem mittels der mobilen Bedieneinheit dem Bediener zur Verfügung gestellten Daten werden bevorzugt zur Verfolgung von Bedruckstoffen durch das Verarbeitungsmaschinensystem und/oder zur Verfolgung oder Aktualisierung von Daten konkreter Aufträge genutzt.

Eine mobile Bedieneinheit kann auch zur sensorischen Erfassung drucktechnisch relevanter Parameter von Materialien, beispielsweise Bedruckstoffen, bzw. Verbrauchsstoffen für die Voreinstellung von Maschinenparametern, insbesondere im Rahmen eines bevorzugt vollautomatischen Auftragswechsels, eingesetzt werden. Zusätzlich oder alternativ zum vollautomatischen Auftragswechsel kann dieselbe mobile Bedieneinheit am Wareneingang bzw. in der Lagerverwaltung eingesetzt werden.

An einer Verarbeitungsmaschine, beispielsweise für einen Auftragswechsel an einer Druckmaschine, kann neben der Übernahme von Druckauftragsdaten wie einer Separationsbelegung, der Bedruckstoffdicke, des Bedruckstoffformates, der Grammatur, einer Farbflächendeckung u. a. insbesondere aus der Druckvorstufe bzw. von einem vorgeschalteten Management-Informationssystem (MIS) oder Produktionsplanungssystem (PPS) z. B. für die Voreinstellung der Messtechnik das Papierweiß des verwendeten Bedruckstoffs benötigt werden, welches nicht über die Auftragsvorbereitung im MIS bzw. PPS geliefert wird. Zur Erfassung des Papierweißes von Bedruckstoffen wird besonders bevorzugt die mobile Bedieneinheit verwendet. Insbesondere kann ein photospektrometrisches Messgerät und/oder ein Papierfeuchtemessgerät in der mobilen Bedieneinheit, insbesondere einem Tablet oder bevorzugt einem Smartphone, integriert sein. Ein Bediener bzw. Anwender kann damit unkompliziert, ohne ggf. selbstverursachte Eingabefehler, das Papierweiß optisch erfassen. Alternativ kann die mobile Bedieneinheit beispielsweise direkt über USB oder Bluetooth mit einem photospektrometrischen Messgerät, beispielsweise einem Messkopf eines Messtisches, und/oder einem Feuchtemessgerät verbunden sein. Die mobile Bedieneinheit kann dafür auch mit einer Kamera, einem NFC-Sensor, einer USB- und/oder einer Bluetooth-Schnittstelle ausgestattet sein. Der Bediener bzw. Anwender (Lagermitarbeiter) kann auch ein handelsübliches Handspektrometer nutzen, wobei dieser nach Erfassung beispielsweise eines Chargencodes die L*a*b*-Werte bevorzugt in eine entsprechende Eingabeform einer auf der mobilen Bedieneinheit installierten App eingibt. Vorteilhafterweise ist ein solches Handspektrometer in einem Verarbeitungsmaschinensystem, insbesondere einem Drucksaal, immer vorhanden, da ein Handspektrometer zur Grundausstattung beispielsweise jeder Druckerei gehört.

Beispielsweise bei einem Bedruckstoffwechsel, insbesondere für einen Auftragswechsel, misst der Bediener mittels des photospektrometrischen Messgerätes das Papierweiß des neuen Bedruckstoffs. In Verbindung mit der mobilen Bedieneinheit werden dabei die Werte der photospektrometrischen Messung einer Datenverwaltungseinrichtung zugeführt bzw. vorhandene Werte beeinflusst, beispielsweise aktualisiert oder ergänzt. Die Datenverwaltungseinrichtung kann mit einem Materiallagersystem, insbesondere einem separaten Materiallager oder wenigstens einem Lagerplatz bzw. einer temporären Abstellfläche, in Verbindung stehen, mit welchem mindestens ein Verbrauchsmaterial, insbesondere der Bedruckstoff, für mindestens eine Verarbeitungsmaschine vorgehalten wird. Die Datenverwaltungseinrichtung enthält dabei insbesondere die Daten des Materiallagerbestandes, welche die insbesondere dem Bedruckstoff zugeordneten Werte einer photospektrometrischen Messung umfassen. Die Datenverwaltungseinrichtung kann auch mit einer oder mehreren Verarbeitungsmaschinen und/oder einer oder mehreren Weiterverarbeitungsmaschinen in Verbindung stehen. Eine jeweilige Verarbeitungsmaschine bzw. Weiterverarbeitungsmaschine kann damit beispielsweise für Rüstprozesse auf die in der Datenverwaltungseinrichtung hinterlegten Werte zugreifen. Bevorzugt wird daher die Verarbeitungsmaschine, insbesondere Druckmaschine, mit der Datenverwaltungseinrichtung, insbesondere einem Produktionsplanungssystem (PPS), beispielsweise als Logotronic bzw. Logotronic Professional bezeichnet, verbunden bzw. an ein PPS angeschlossen. Damit kann insbesondere eine Wareneingangserfassung beispielsweise von Bedruckstoffen und/oder eine Chargenverfolgung mit einer auf der mobilen Bedieneinheit befindlichen App in Verbindung mit dem Produktionsplanungssystem (PPS) erfolgen.

Insbesondere können die die photospektrometrische Messung von Bedruckstoffen betreffenden Werte für einen Auftragswechsel an einer Druckmaschine genutzt werden. Dies ermöglicht insbesondere eine Voreinstellung der Farbregelung, was einen unterbrechungsfreien Auftragswechsel ermöglicht, da damit z. B. ein Inline-Farbregelsystem auf den neuen Bedruckstoff eingestellt bzw. eingemessen werden kann. Bevorzugt kann dabei durch die auftragsspezifisch kalibrierte Messtechnik der Maschine, insbesondere der Druckmaschine oder Bogendruckmaschine, ein unterbrechungsfreier bzw. vollautomatischer Auftragswechsel durchgeführt werden. Der vollautomatische Auftragswechsel kann unterbrechungsfrei durchgeführt werden, da das Farbregelsystem insbesondere vorab auf das Papierweiß des zu verwendenden Bedruckstoffs angelernt bzw. kalibriert ist. Vorteilhafterweise wird so die Anzahl der um ein stabiles Druckbild zu erreichenden notwendigen Makulaturbogen reduziert.

Im Folgenden soll die Erfindung beispielhaft erläutert werden. Die dazugehörige Zeichnung stellt dabei schematisch dar:

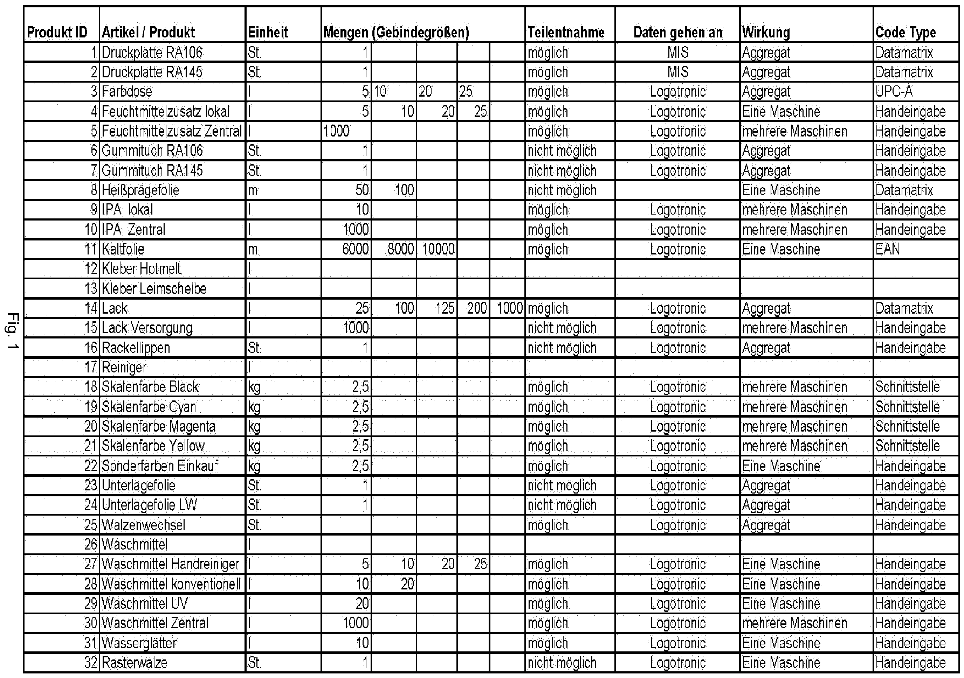

- Fig. 1:: Tabelle einer Datenbank einer Datenverwaltungseinrichtung eines Verarbeitungsmaschinensystems.

Die einzige Fig. 1 zeigt beispielsweise Daten einer Datenverwaltungseinrichtung eines Verarbeitungsmaschinensystems in tabellarischer Form. Die Daten der Datenverwaltungseinrichtung können in einer ersten Spalte die hier nicht eingetragenen Produkt-ID's, die beispielsweise in einem stoffgebundenen Merkmal des Verarbeitungsmaschinensystems hinterlegt sind, enthalten. Insbesondere in den örtlich gebundenen Merkmalen, insbesondere in Tags oder NFC-Tags, können die jeweiligen zugehörigen Verbrauchsmaterialien bzw. deren Produkt-ID's hinterlegt sein. In einer zweiten Spalte der Daten der Datenverwaltungseinrichtung können den Produkt-ID's die zugehörigen Artikel/Produkte eineindeutig zugeordnet sein. Dabei kann das Verbrauchsmaterial nachzufüllende Stoffe, wie Reiniger oder andere Flüssigkeiten, oder auch auszuwechselnde Materialien, wie Rakellippen oder Walzen, insbesondere Rasterwalzen, umfassen. Bei den Artikeln/Produkten handelt es sich insbesondere um Verbrauchsmaterial des Verarbeitungsmaschinensystems, hier insbesondere um Verbrauchsmaterial aus der Gruppe von Druckplatten für eine oder mehrere ggf. verschiedene Druckmaschinen, insbesondere Bogendruckmaschinen, des Verarbeitungsmaschinensystems, Farbdose oder Farbdosen, Feuchtmittelzusatz lokal, Feuchtmittelzusatz Zentral, Gummitücher für die Maschine oder die verschiedenen Maschinen, Heißprägefolie, IPA (Isopropylalkohol), Kaltfolie, Kleber Hotmelt, Kleber Leimscheibe, Lack, Lack Versorgung, Rackellippen, Reiniger, Skalenfarben Black, Cyan, Magenta, Yellow, Sonderfarben, Unterlagefolie, Unterlagefolie LW (Lackwerk), Walzenwechsel, Waschmittel, Waschmittel Handreiniger, Waschmittel konventionell, Waschmittel UV (ultraviolett), Waschmittel Zentral, Wasserglätter und Rasterwalze für eine oder mehrere Maschinen. Die in der Datenbank hinterlegten Daten bezüglich des Verbrauchsmaterials können beispielsweise maschinengebunden gespeichert sein. Hier kann das Verbrauchsmaterial speziell für unterschiedliche Druckmaschinen bzw. Druckmaschinengruppen abgelegt sein. In der Datenbank sind beispielsweise Daten von Druckplatten und Gummitüchern für jeweils eine Rapida 106 und eine Rapida 145 hinterlegt.

Zu jedem Artikel/Produkt kann in einer dritten Spalte eine Einheit und in einer vierten Spalte die Menge (Gebindegröße) hinterlegt sein. Dabei können die Mengenangaben auch in definierten Mengenabschnitten angegeben bzw. vorwählbar sein. In einer fünften Spalte ist hinterlegt, ob eine Teilentnahme des entsprechenden Artikels/Produktes möglich ist. In einer sechsten Spalte ist hinterlegt, welches verbundene Steuersystem die Daten oder auch geänderte Daten der Datenverwaltungseinrichtung zur Verfügung gestellt bzw. übermittelt bekommt. Die zusätzlichen Systeme sind hier beispielsweise Maschinensteuerungen bzw. Qualitätskontrolleinrichtungen. In einer siebenten Spalte ist zum jeweiligen Artikel/Produkt hinterlegt, welche Wirkung entfaltet wird. Beispielsweise kann ein Artikel/Produkt auf ein Aggregat bzw. eine oder mehrere Maschinen wirken. In einer achten Spalte ist zum jeweiligen Artikel/Produkt hinterlegt, wie Daten erfasst werden können. Die Erfassung kann beispielsweise mittels eines Datamatrix-Codes, Strichcodes (Universal Product Code UPC oder European Article Number EAN) oder Handeingabe insbesondere über die mobile Bedieneinheit erfolgen. Es können auch weitere Verbrauchsmaterialen aufgenommen und/oder weitere Daten über Verbrauchsmaterialen hinterlegt werden. Die in der Datenverwaltungseinrichtung hinterlegten Daten können bei Bedarf oder auf Anforderung von der mobilen Bedieneinheit dieser übermittelt werden, so dass die mobile Bedieneinheit diese Daten dem Bediener teilweise oder vollständig zur Verfügung stellen kann. Dabei werden bevorzugt nur die jeweils am Ort der Bedieneinheit benötigten relevante Daten bzw. mit diesen verknüpfte Zusatzinformationen übermittelt.

Beispielsweise kann an einer Verarbeitungsmaschine, insbesondere einer bogenverarbeitenden Maschine, beispielsweise einer Bogendruckmaschine, speziell einer Bogenoffsetrotationsdruckmaschine in Aggregat- und Reihenbauweise, des Verarbeitungsmaschinensystems ein Auftrag abgearbeitet werden, bei dem aus einer Farbdose nachfüllbare Farbe als Verbrauchsmaterial verbraucht wird. Die Farbe wird von einem Bediener in regelmäßigen Abständen oder bei Bedarf nachgefüllt. Zum Nachfüllen begibt sich der Bediener mit der mobilen Bedieneinheit zum jeweiligen Ort, an dem die Farbe nachgefüllt werden muss. An dieser Stelle kann der Bediener seine mobile Bedieneinheit in Wechselwirkung mit dem am Ort angebrachten stoffgebunden Merkmal, insbesondere mit einem Tag oder NFC-Tag bringen. Beispielsweise über einen konkreten NFC-Tag wird mittels NFC-Technologie bzw. Datenübertragung ein eindeutiger Identifikationscode durch die mobile Bedieneinheit erkannt und damit beispielsweise in Verbindung mit der Datenverwaltungseinrichtung die zugehörige Information auf der mobilen Bedieneinheit zur Verfügung gestellt. Wird beispielsweise die Farbe nachgefüllt, dann können dem Bediener zusätzliche Informationen zu dieser Farbe angezeigt werden, wie z. B. wie viel kg werden für den laufenden Auftrag noch benötigt und/oder wie viel kg dieser Farbe sind noch im Lager und/oder was kostet die Farbe, die für den Auftrag bereitgestellt wurde und/oder wann muss das nächste Mal nachgefüllt bzw. nachbestellt werden.

Auf ähnliche Weise können dem Bediener praktisch und einfach Informationen bei einem Materialwechsel, beispielsweise einem Wechsel einer Rasterwalze, zur Verfügung gestellt werden. Beispielsweise kann nach der Erkennung eines entsprechend platzierten stoffgebundenen Merkmals, beispielsweise eines Tags oder NFC-Tags, durch die mobile Bedieneinheit über die Verbindung zur Datenverwaltungseinrichtung von der mobile Bedieneinheit Informationen angezeigt werden, wie: wie viele Bogen wurden mit der Rasterwalze bereits produziert und/oder die theoretische Lebensdauer der Rasterwalze bzw. wie lange kann die Rasterwalze noch benutzt werden. Ein stoffgebundenes Merkmal, insbesondere ein Tag oder NFC-Tag, kann beispielsweise auf der Oberfläche der Maschine oder auch auf einer Innenseite eines beispielsweise klappbaren Schutzes platziert werden, wobei der Schutz erst geöffnet sein muss, um die mobile Bedieneinheit in Wechselwirkung mit dem stoffgebundenen Merkmal, insbesondere Tag oder NFC-Tag, bringen zu können. Ein bevorzugter Tag bzw. NFC-Tag ist dabei bevorzugt ein Objekt bzw. Körper an der Oberfläche, welcher Informationen insbesondere nach elektromagnetischer Ansprache durch die mobile Bedieneinheit auf elektromagnetischem Weg an die mobile Bedieneinheit überträgt.

Es kann weiter vorgesehen sein, stoffgebundene Merkmale, insbesondere Tags oder NFC-Tags, für weitere Produkte an einer Maschine, einer Weiterverarbeitungsmaschine und/oder an Verbrauchsmaterial selbst anzubringen. Dabei ist es vorgesehen, eines oder mehrere oder alle Produkte aus der Gruppe der Verbrauchsmaterialen zu erfassen, insbesondere: Druckplatten, Farbdosen, Feuchtmittelzusatz, Gummitücher, Heißprägefolie, Handreiniger, IPA, Kaltfolie, Kleber, Hotmelt, Kleber Leimscheibe, Lack, Rackellippen, Reiniger, Skalenfarben, Unterlagefolie, Unterlagefolie LW, Walzenwechsel, Waschmittel UV und/oder Wasserglätter. Zu jedem angeordneten stoffgebundenen Merkmal, insbesondere Tag oder NFC-Tag, welches in der Datenverwaltungseinrichtung hinterlegt ist kann die Verknüpfung zu dem entsprechenden Produkt hergestellt werden, wobei der Datenverwaltungseinrichtung bevorzugt der Ort des betreffenden stoffgebundenen Merkmales bekannt ist. Dabei können auch mehrere stoffgebundene Merkmale, insbesondere Tags oder NFC-Tags, zu einem Produkt hinterlegt sein. Die dem jeweilige Produkt zugehörigen Daten werden mittels Datenbanken bzw. Datenverwaltung der Datenverwaltungseinrichtung hinterlegt. Bei Übermittlung eines Identifikationscodes oder bei Übermittlung eines von der mobilen Bedieneinheit erkannten Codes stellt die Datenverwaltungseinrichtung die Daten der mobilen Bedieneinheit zum Abruf bzw. deren Anzeige bereit. Über die mobile Bedieneinheit werden die relevanten Daten dann dem Bediener von der mobilen Bedieneinheit zur Verfügung gestellt. Auch Änderungen der Daten mittels der mobilen Bedieneinheit ggf. nach Freigabekriterien und Aktualisierung in der Datenverwaltungseinrichtung sind vorgesehen.

Weiter kann vorgesehen sein, über die mobile Bedieneinheit, insbesondere über ein Smartphone, dem Bediener Daten über eine Bedienhandlung, beispielweise eine vorgesehene Bogenentnahme in einer Auslage einer bogenverarbeitenden Maschine, insbesondere Bogendruckmaschine speziell einer Bogenoffsetrotationsdruckmaschine in Aggregat- und Reihenbauweise wie oben beschrieben, zur Verfügung zu stellen. Dabei kann dem Bediener eine bevorstehende insbesondere automatisch ausgelöste Probebogenentnahme und/oder eine Aufforderung zur Entnahme von Makulaturbogen bzw. Fehlerbogen mitgeteilt werden. Dabei werden insbesondere automatisch generierte Probebogen oder von einer Qualitätskontrolleinrichtung, beispielsweise einer Inline-Inspektionseinrichtung, erkannte Fehlerbogen für eine unvorhergesehene Bogenentnahme vorgesehen. Die Mitteilung der Bedienhandlung, insbesondere der Bogenentnahme, kann dabei derart frühzeitig erfolgen, dass der Bediener den Ort der Bedienhandlung, insbesondere Bogenentnahme, aufsuchen kann. Die Mitteilung der Bedienhandlung über die mobile Bedieneinheit, insbesondere das Smartphone, kann dabei optisch, akustisch und/oder mechanisch, beispielsweise über einen Vibrationsalarm, ggf. mit Zusatzinformationen erfolgen.

Beispielsweise kann auch ein Arbeitsablauf einer Lagerverwaltung und/oder Chargenverfolgung mittels einer auf der mobilen Bedieneinheit installierten App wie nachfolgend beispielhaft am Bedruckstoff beschrieben erfolgen. Zuerst werden insbesondere am Lagereingang beispielsweise der Druckerei die Bedruckstoffstapel entgegengenommen. Am entsprechend dafür vorgesehenen Lagerplatz bzw. einer Palette ist ein speziell diesem Bedruckstoff zugewiesener Tag oder NFC-Tag angebracht. Insbesondere mittels NFC-Schnittstelle der mobilen Bedieneinheit, insbesondere Smartphone, und der auf dieser installierten App wird dieser NFC-Tag eingescannt und die am mit dem NFC-Tag gekennzeichneten Lagerplatz eingelagerte Bedruckstoffmenge in der Lagerverwaltung der Datenverwaltungseinrichtung, insbesondere in den Daten des Materiallagerbestandes, verbucht. Zusätzlich wird zur Angabe der eingelagerten Menge bevorzugt bereits hier ein Chargencode gescannt bzw. erfasst.

Ein beispielsweise mit der mobilen Bedieneinheit gekoppeltes Spektrometer oder ein in der mobilen Bedieneinheit integrierter eine photospektrometrische Messung ausführender Sensor bzw. Spektrometer ermöglicht es, das Papierweiß des Bedruckstoffs, beispielsweise von Vorder- und Rückseite, bereits vor der Einlagerung des Bedruckstoffes in das Materiallager beim Wareneingang oder während der Einlagerung zu erfassen und dem zugehörigen Chargencode zuzuordnen. Beispielsweise wird das Papierweiß mit dem Sensor gemessen und innerhalb der Datenverwaltungseinrichtung, insbesondere in den Daten des Materiallagerbestandes, der Charge zugeordnet. Zum Beispiel von Consumer Physics ist ein geeigneter per Bluetooth 4.0 LE koppelbarer Nahinfrarotspektroskopie-Sensor SciO erhältlich. Weiter ist zum Beispiel eine vom Fraunhofer Institut entwickelte App zur spektrometrischen Analyse ohne zusätzlich erforderliche Hardware (HawkSpex® mobile) bekannt, die in Verbindung mit bereits in mobilen Bedieneinheiten integrierter Sensorik für die photospektrometrische Messung von Farben genutzt werden kann.

Weiter bevorzugt ist an der Maschine, beispielsweise der Bogendruckmaschine, als Verbrauchsstelle ein Tag oder NFC-Tag für Verbrauchsstoffe bzw. Material, insbesondere den Bedruckstoff, angebracht. Wird ein Bedruckstoffstapel aus der derart im Materiallager eingelagerten Menge beispielsweise in einen Anleger der Bogendruckmaschine gefahren, wird der Tag oder NFC-Tag durch die mobile Bedieneinheit eingescannt und somit durch die auf der mobilen Bedieneinheit installierten App die zu verbrauchende Menge aus dem Lagerbestand der Datenverwaltungseinrichtung, insbesondere in den Daten des Materiallagerbestandes, beispielsweise der Logotronic, ausgebucht. Bevorzugt wird der Bediener bzw. Anwender zur Chargenverfolgung durch die auf der mobilen Bedieneinheit installierte App aufgefordert, einen Chargencode per Barcode-/Datamatrix-Scanmodul bzw. Kamera oder durch manuelle Eingabe zu erfassen. Diese Chargenkennzeichnung wird in der Datenverwaltungseinrichtung dem beispielsweise in der Maschine, insbesondere Bogendruckmaschine, befindlichen Auftrag zugeordnet.

Wird nun beim Stapelwechsel der Chargencode per mobiler Bedieneinheit in Verbindung mit der installierten App eingescannt, kann mit deren Hilfe durch die Datenverwaltungseinrichtung, insbesondere mittels der Daten des Materiallagerbestandes, beispielsweise der Logotronic, dem zu ladenden oder bereits in der Maschinen befindlichen Auftrag das Papierweiß von Vorder- und/oder Rückseite zugeordnet und somit der Messtechnik zur Verfügung gestellt werden. Insbesondere kann dabei ein Inline-Messsystem, beispielsweise eine Qualitätskontroll-Kamera bzw. ein Inspektionssystem der Maschine, mit den zur Verfügung stehenden Daten bzw. Werten der Papierweißmessung beispielsweise vorab kalibriert werden. Beispielsweise während eines Auftragswechsels ist damit ein manueller Papierweißmessvorgang somit nicht mehr erforderlich und ein vollautomatischer Auftragswechsel kann unterbrechungsfrei, d. h. ohne manuellen Einmessvorgang beispielsweise am Messtisch durchgeführt werden.

Weiter kann die mobile Bedieneinheit um weitere Sensorik und/oder Schnittstellen erweitert werden, so dass weitere drucktechnisch relevante Parameter, die beispielsweise zur automatischen Maschinenvoreinstellung genutzt werden können, schon bei einem Lagereingang erfassbar sind. Die mobile Bedieneinheit ermöglicht daher die generelle Erfassung von drucktechnisch relevanten Parametern von Druckausgangsmaterialien wie Farben, Bedruckstoffen bzw. die Papierfeuchtemessung beispielsweise im Stapel etc. und deren automatische Zuordnung zu einem in einer Verarbeitungsmaschine, insbesondere Druckmaschine oder Bogendruckmaschine, und/oder einer Weiterverarbeitungsmaschine zu ladenden Auftrag insbesondere für eine bevorzugt vollautomatische Maschinenvoreinstellung.

In weiterer bevorzugter Ausführung erfolgt eine Optimierung der Prozesse zur Herstellung eines Produktes insbesondere in einem Betrieb mit mehreren Maschinen. Beispielsweise kann das Verarbeitungsmaschinensystem mindestens zwei Produktionsmaschinen, z. B. eine Druckmaschine und eine Stanze, enthalten. Für die Herstellung des Produktes gibt es insbesondere ein Produktionssteuerungssystem PPS, welches die Auftragsdaten (z. B. Auftragsnummer, Auftragsname, Mengen, Kunde, Liefertermine ...) enthält. Dabei wird die Datenverbindung zur Maschine, beispielsweise der Druckmaschine und/oder der Stanze, mit Hilfe der mindestens einen mobilen Bedieneinheit hergestellt, wobei Applikationen bzw. Programme auf der mobilen Bedieneinheit in Verbindung mit einer Unterstützung durch Tags oder NFC-Tags gesteuert werden.

Beispielsweise erfolgt eine Erzeugung von Arbeitspapieren (z. B. Label, Stapelkarte) für jedes Fertigungslos, wenn ein Stapel mit bedruckten Bogen aus einer Bogenauslage einer Bogendruckmaschine entnommen wird. Dabei wird der Druck des Arbeitspapieres, beispielsweise der Druck einer Stapelkarte, über die mobile Bedieneinheit angefordert. Beispielsweise wird mit einem Tag oder NFC-Tag, welcher bevorzugt an einer Stelle der Maschine für eine Bedruckstoffentnahme z. B. an der Bogenauslage angebracht ist, in der mobilen Bedieneinheit, insbesondere Smartphone, ein Programm gestartet, welches die Verbindung zum Leitsystem, insbesondere PPS, MIS bzw. Danteverwaltungseinrichtung, aufnimmt und den Druck eines Arbeitspapieres, z. B. der Stapelkarte, auslöst.

Auf dem Arbeitspapier (z. B. der Stapelkarte) sind dann alle relevanten Daten, die das Los bzw. den Stapel kennzeichnen, gedruckt sowie bevorzugt ein maschinenlesbarer Code, mit dem das Los bzw. der Stapel eindeutig identifiziert werden kann. Alternativ zum Code, könnte dem Los bzw. dem Stapel auch ein weiterer Tag oder NFC-Tag zugeordnet werden, mit dem eine Identifizierung erfolgen kann. In diesem Fall könnte der physische Druck der Arbeitspapiere (z. B. der Stapelkarte) entfallen.

Wenn das Fertigungslos bzw. der Stapel an der nächsten Maschine, beispielsweise ebenfalls einer Druckmaschine oder einer Weiterverarbeitungsmaschine wie der Stanze, ankommt, dann wird über einen ortsgebunden bzw. maschinengebunden an der Maschine, insbesondere an einer Stelle für eine Bedruckstoffzuführung, z. B. am Anleger der Stanze, angebrachten Tag oder NFC-Tag mindestens eine Applikation (Programm) auf der mobilen Bedieneinheit insbesondere vollautomatisch beispielsweise ausschließlich durch Annäherung, gestartet. Der Applikation (App) bzw. dem Programm ist dabei der Ort, z. B. der Ort des Anlegers der Stanze, ggf. automatisch bekannt, so dass dieser mit den Daten des Fertigungsloses bzw. des Stapels in Verbindung gebracht werden kann, also verknüpft werden kann. Das Fertigungslos bzw. der Stapel kann bspw. durch scannen des Codes oder identifizieren des Tags oder NFC-Tags ermittelt werden. Im PPS bzw. des MIS bzw. der Datenverwaltungseinrichtung führt dies insbesondere dazu, dass die Position des Fertigungsloses bzw. des Stapels (ggf. mit Ort bzw. Uhrzeit) bekannt ist bzw. aktualisiert wird. Mit diesen Informationen ist demnach der Fortschritt der Produktion erkennbar. Es kann beispielsweise ein Auftragswechsel an der Produktionsmaschine angezeigt werden, da das Los bzw. der Stapel zu einem neuen Auftrag gehört, usw..

Besonders einfach kann eine Erkennung eines NFC-Tags ohne weitere Bedienhandlung ausschließlich durch Annäherung der mobilen Bedieneinheit an den konkreten NFC-Tag erfolgen, wobei das Erfassen des NFC-Tags durch die mobile Bedieneinheit insbesondere bei einem Abstand zwischen NFC-Tag und mobiler Bedieneinheit von weniger als 4 cm erfolgt. Ein Kontakt zwischen mobiler Bedieneinheit und NFC-Tag ist aber nicht erforderlich.

## Patentansprüche

1. Verarbeitungsmaschinensystem mit mindestens einer mobilen Bedieneinheit,
wobei mindestens ein stoffgebundenes Merkmals des Verarbeitungsmaschinensystems durch die mobile Bedieneinheit erfassbar ist,
wobei bei Erfassung des stoffgebundenen Merkmales durch die mobile Bedieneinheit einem Bediener merkmalszugehörige Daten von der mobilen Bedieneinheit zur Verfügung stellbar und/oder gestellt sind und
wobei die merkmalszugehörigen Daten Daten über mindestens ein Verbrauchsmaterial des Verarbeitungsmaschinensystems enthalten,
**dadurch gekennzeichnet,**
**dass** das stoffgebundene Merkmal ein Tag ist, der von der mobilen Bedieneinheit ohne Bedienhandlung ausschließlich durch Annäherung bei einem Abstand zwischen mobiler Bedieneinheit und Tag kleiner als 4 cm berührungslos erfassbar ist.

2. Verarbeitungsmaschinensystem nach Anspruch 1,
**dadurch gekennzeichnet,**
**dass** mehrere Tags im Verarbeitungsmaschinensystem, an einer Verarbeitungsmaschine und/oder einer Weiterverarbeitungsmaschine vorgesehen sind, wobei jeder Tag einen insbesondere eineindeutigen Identifikationscode aufweist oder enthält.

3. Verarbeitungsmaschinensystem nach Anspruch 1 oder 2,
**dadurch gekennzeichnet,**
**dass** der Tag mindestens einen Link zu einer konkret auf die mobile Bedieneinheit zu ladenden Applikation einer Datenverwaltungseinrichtung und/oder einer Maschinensteuerung aufweist oder enthält.

4. Verarbeitungsmaschinensystem nach Anspruch 1, 2 oder 3,
**dadurch gekennzeichnet,**
**dass** der Tag eine Verbindungsinformation für die mobile Bedieneinheit enthält, die die mobile Bedieneinheit zu Daten oder konkreten Daten einer Datenverwaltungseinrichtung, eines Produktionssteuersystems und/oder einer Maschinensteuerung verlinkt.

5. Verarbeitungsmaschinensystem nach Anspruch 1, 2, 3 oder 4,
**dadurch gekennzeichnet,**
**dass** das Verbrauchsmaterial ein zu bedruckender oder bedruckter Bedruckstoff ist oder das Verbrauchsmaterial gewählt ist aus einer Gruppe von Druckplatte, Farbdose, Feuchtmittelzusatz, Gummituch, Heißprägefolie, Handreiniger, IPA, Kaltfolie, Kleber Hotmelt, Kleber Leimscheibe, Lack, Rackellippe, Reiniger, Skalenfarbe, Unterlagefolie, Unterlagefolie LW, Walze, Waschmittel UV und/oder Wasserglätter.

6. Verarbeitungsmaschinensystem nach Anspruch 1, 2, 3, 4 oder 5,
**dadurch gekennzeichnet,**
**dass** die Daten des Verbrauchsmaterials eine Auftragsnummer, einen Auftragsname, eine Menge, Kundendaten und/oder einen Liefertermin umfassen oder die Daten des Verbrauchsmaterials die Bezeichnung, die Menge, die Einheit, den Preis, eine Teilentnahmemöglichkeit, Informationen über Datenweitergaben, den Wirkungskreis und/oder Dateneingabe- oder Änderungsmöglichkeiten umfassen.

7. Verarbeitungsmaschinensystem nach Anspruch 1, 2, 3, 4, 5 oder 6,
**dadurch gekennzeichnet,**
**dass** die mobile Bedieneinheit mit einer mit einem Materiallagersystem in Verbindung stehenden Datenverwaltungseinrichtung in Verbindung steht, wobei die Datenverwaltungseinrichtung Daten des Materiallagerbestandes von Verbrauchsmaterial enthält.

8. Verfahren zum Betreiben eines Verarbeitungsmaschinensystems mit mindestens einer mobilen Bedieneinheit,
wobei mindestens ein stoffgebundenes Merkmal des Verarbeitungsmaschinensystems durch die mobile Bedieneinheit erfasst wird,
wobei bei Erfassung des stoffgebundenen Merkmales durch die mobile Bedieneinheit einem Bediener merkmalszugehörige Daten von der mobilen Bedieneinheit zur Verfügung gestellt werden und
wobei die merkmalszugehörigen Daten Daten über mindestens ein Verbrauchsmaterial des Verarbeitungsmaschinensystems enthalten,
**dadurch gekennzeichnet,**
**dass** das stoffgebundene Merkmal ein Tag ist, welcher mit Hilfe der mobilen Bedieneinheit erkannt wird und
**dass** bei oder durch Erfassung des Tags durch die mobile Bedieneinheit ein Sensorsystem der mobilen Bedieneinheit automatisch aktiviert wird.

9. Verfahren nach Anspruch 8,
**dadurch gekennzeichnet,**
**dass** mit Hilfe der mobilen Bedieneinheit der Tag ohne Bedienhandlung ausschließlich durch Annäherung der mobilen Bedieneinheit an den konkreten Tag erkannt wird und/oder dass die mobile Bedieneinheit nach erkennen eines erfassten Tags die merkmalsabhängigen Daten ohne zusätzliche Bedienhandlung von einer Datenverwaltungseinrichtung bereitgestellt und/oder übermittelt bekommt.

10. Verfahren nach Anspruch 8 oder 9,
**dadurch gekennzeichnet,**
**dass** mittels eines Sensorsystems der mobilen Bedieneinheit Daten von Verbrauchsmaterial aufgenommen und/oder einer Datenverwaltungseinrichtung übermittelt werden und/oder dass die Daten über das Verbrauchsmaterial in Abhängigkeit des konkret erkannten Tags zur Verfügung gestellt werden.

11. Verfahren nach Anspruch 8, 9 oder 10,
**dadurch gekennzeichnet,**
**dass** durch die mobile Bedieneinheit dem Bediener Daten über auszuführende Bedienhandlungen an einer Verarbeitungsmaschine und/oder einer Weiterverarbeitungsmaschine im Verarbeitungsmaschinensystem zur Verfügung gestellt werden und/oder dass der Bediener durch einzelne Schritte von Bedienhandlungen von der mobilen Bedieneinheit geführt und/oder geleitet wird.

12. Verfahren nach Anspruch 8, 9, 10 oder 11,
**dadurch gekennzeichnet,**
**dass** nach elektromagnetischer Ansprache eines jeweiligen als NFC-Tag ausgebildeten Tags durch eine NFC-Schnittstelle der mobilen Bedieneinheit durch den konkreten NFC-Tag der mobilen Bedieneinheit Daten über Verbrauchsmaterial zur Verfügung gestellt werden, welche über den konkreten NFC-Tag zugeordnet werden oder auf dem NFC-Tag gespeichert sind.

13. Verfahren nach Anspruch 8, 9, 10, 11 oder 12,
**dadurch gekennzeichnet,**
**dass** die mobile Bedieneinheit drahtlos und/oder über einen Webserver kommuniziert und/oder eine Mehrzahl von mobilen Bedieneinheiten mit einer Datenverwaltungseinrichtung, insbesondere einem Produktionssteuersystem, des Verarbeitungsmaschinensystems in Verbindung stehen.

14. Verfahren nach Anspruch 8, 9, 10, 11, 12 oder 13,
**dadurch gekennzeichnet,**
**dass** über die mobile Bedieneinheit Informationen über Mengen von vorrätigem Verbrauchsmaterial zu einem aktuellen Druckauftrag einer Druckmaschine und/oder über Mengen von auftragsbezogen nötigem Verbrauchsmaterial zur Verfügung gestellt werden.

15. Verwendung einer mobilen Bedieneinheit einer Verarbeitungsmaschine und/oder einer Weiterverarbeitungsmaschine eines Verarbeitungsmaschinensystems zur Verfügungstellung von Daten über mindestens ein Verbrauchsmaterial des Verarbeitungsmaschinensystems nach einem konkreten Erkennen eines erfassten Tags oder NFC-Tags.

## Claims

1. A processing machine system having at least one mobile control unit,
wherein at least one material-specific feature of the processing machine system can be detected by the mobile control unit,
wherein, upon detection of the material-specific feature by the mobile control unit, data associated with the feature can be and/or are supplied to an operator by the mobile control unit, and
wherein the data associated with the feature contain data relating to at least one consumable material of the processing machine system,
**characterized in that**
the material-specific feature is a tag which can be detected by the mobile control unit in a contactless manner, without a control operation, solely as a result of proximity, at a distance of less than 4 cm between the mobile control unit and the tag.

2. The processing machine system according to Claim 1,
**characterized in that**
multiple tags are provided in the processing machine system, on a processing machine, and/or on a post-press processing machine, wherein each tag has or contains in particular a unique identification code.

3. The processing machine system according to Claim 1 or 2,
**characterized in that**
the tag includes or contains at least one link to an application of a data management system and/or a machine controller, which application is to be loaded specifically onto the mobile control unit.

4. The processing machine system according to Claim 1, 2 or 3,
**characterized in that**
the tag contains connection information for the mobile control unit, which links the mobile control unit to data or specific data of a data management system, a production control system, and/or a machine controller.

5. The processing machine system according to Claim 1, 2, 3 or 4,
**characterized in that**
the consumable material is a printing substrate that is or will be imprinted, or the consumable material is selected from a group composed of printing plate, ink can, dampening medium additive, blanket, hot stamping foil, hand cleanser, IPA, cold foil, hotmelt adhesive, glue wheel adhesive, varnish, doctor blade lip, cleaning agent, process ink, underpacking foil, CU underpacking foil, roller, UV detergent and/or blanket cleaner.

6. The processing machine system according to Claim 1, 2, 3, 4 or 5,
**characterized in that**
the data of the consumable material include a job number, a job name, a quantity, customer data, and/or a delivery date, or the data of the consumable material comprise the designation, the quantity, the unit, the price, a partial removal option, information about data transfers, the scope of influence, and/or data entry or modification options.

7. The processing machine system according to Claim 1, 2, 3, 4, 5 or 6,
**characterized in that**
the mobile control unit is linked to a data management system which is linked to a materials warehousing system, wherein the data management system contains data relating to the materials inventory of consumable materials.

8. A method for operating a processing machine system having at least one mobile control unit,
wherein at least one material-specific feature of the processing machine system is detected by the mobile control unit, and
wherein, upon detection of the material-specific feature by the mobile control unit, data associated with the feature are supplied to an operator by the mobile control unit, and wherein the data associated with the feature contain data relating to at least one consumable material of the processing machine system,
**characterized in that**
the material-specific feature is a tag which is recognized with the aid of the mobile control unit, and
**in that** a sensor system of the mobile control unit is activated automatically upon or as a result of detection of the tag by the mobile control unit.

9. The method according to Claim 8,
**characterized in that**
with the aid of the mobile control unit, the tag is recognized without any control operation, simply by the mobile control unit moving closer to the specific tag, and/or **in that** upon recognition of a detected tag, the mobile control unit is provided with and/or receives the feature-dependent data from a data management system without additional control operation.

10. The method according to Claim 8 or 9,
**characterized in that**
data relating to consumable materials are received and/or are transmitted to a data management system by means of a sensor system of the mobile control unit, and/or **in that** the data relating to the consumable material are supplied dependent upon the particular recognized tag.

11. The method according to Claim 8, 9 or 10,
**characterized in that**
data relating to control operations to be carried out on a processing machine and/or a post-press processing machine in the processing machine system are supplied to the operator by the mobile control unit, and/or **in that** the operator is guided and/or directed through individual steps of control operations by the mobile control unit.

12. The method according to Claim 8, 9, 10 or 11,
**characterized in that**
after a particular tag embodied as an NFC tag is addressed electromagnetically via an NFC interface of the mobile control unit, data relating to consumable material, which are assigned via the particular NFC tag or are stored on the NFC tag, can be supplied to the mobile control unit via the particular NFC tag.

13. The method according to Claim 8, 9, 10, 11 or 12,
**characterized in that**
the mobile control unit communicates wirelessly and/or via a web server, and/or **in that** a plurality of mobile control units are linked to a data management system, in particular a production control system, of the processing machine system.

14. The method according to Claim 8, 9, 10, 11, 12 or 13,
**characterized in that**
information regarding quantities of consumable materials that are in stock for a current print job on a printing press is supplied via the mobile control unit, and/or **in that** information regarding job-specific quantities of required consumable materials is supplied via the mobile control unit.

15. A use of a mobile control unit of a processing machine and/or a post-press processing machine of a processing machine system for the purpose of supplying data relating to at least one consumable material of the processing machine system following a specific recognition of a detected tag or NFC tag.

## Revendications

1. Système de machine de traitement avec au moins une unité de commande utilisateur mobile,
dans lequel au moins une caractéristique liée au matériau du système de machine de traitement peut être détectée par l'unité de commande utilisateur mobile,
dans lequel lors de la détection de la caractéristique liée au matériau par l'unité de commande utilisateur mobile, des données correspondant à la caractéristique peuvent être fournies et/ou sont fournies à un utilisateur par l'unité de commande utilisateur mobile et
dans lequel les données correspondant à la caractéristique contiennent des données concernant au moins un produit consommable du système de machine de traitement,
**caractérisé en ce**
**que** la caractéristique liée au matériau est une étiquette, qui peut être détectée sans contact par l'unité de commande utilisateur mobile sans action de commande utilisateur exclusivement par rapprochement avec un écart entre l'unité de commande utilisateur mobile et l'étiquette inférieur à 4 cm.

2. Système de machine de traitement selon la revendication 1,
**caractérisé en ce**
**que** plusieurs étiquettes sont prévues dans le système de machine de traitement, sur une machine de traitement et/ou une machine de retraitement, dans lequel chaque étiquette présente ou contient un code d'identification en particulier biunivoque.

3. Système de machine de traitement selon la revendication 1 ou 2,
**caractérisé en ce**
**que** l'étiquette présente ou contient au moins un lien vers une application d'un dispositif de gestion de données et/ou d'une commande de machine à télécharger de manière concrète sur l'unité de commande utilisateur mobile.

4. Système de machine de traitement selon la revendication 1, 2 ou 3,
**caractérisé en ce**
**que** l'étiquette contient une information de liaison pour l'unité de commande utilisateur mobile, qui relie l'unité de commande utilisateur mobile à des données ou des données concrètes d'un dispositif de gestion de données, d'un système de commande de production et/ou d'une commande de machine.

5. Système de machine de traitement selon la revendication 1, 2, 3 ou 4,
**caractérisé en ce**
**que** le produit consommable est un matériau d'impression à imprimer ou imprimé ou le produit consommable est choisi dans un groupe de planche d'impression, pot de peinture, additif de mouillage, blanchet, feuille d'estampage à chaud, nettoyant pour mains, alcool isopropylique, pelliculage à froid, colle thermofusible, colle appliquée par disque, vernis, lèvre de raclage, nettoyant, couleur de gamme, feuille support, feuille support LW, cylindre, détergent UV et/ou réducteur tension.

6. Système de machine de traitement selon la revendication 1, 2, 3, 4 ou 5,
**caractérisé en ce**
**que** les données du produit consommable comprennent un numéro d'ordre, un nom d'ordre, une quantité, des données clients et/ou un délai de livraison ou les données du produit consommable comprennent la désignation, la quantité, l'unité, le prix, une possibilité de retrait partiel, des informations concernant des transmissions des données, le champ d'action et/ou des possibilités de saisie ou de modification de données.

7. Système de machine de traitement selon la revendication 1, 2, 3, 4, 5 ou 6,
**caractérisé en ce**
**que** l'unité de commande utilisateur mobile est reliée à un dispositif de gestion de données relié à un système de stockage de produit, dans lequel le dispositif de gestion de données contient des données du stock de produit de produit consommable.

8. Procédé pour faire fonctionner un système de machine de traitement avec au moins une unité de commande utilisateur mobile,
dans lequel au moins une caractéristique liée au matériau du système de machine de traitement peut être détectée par l'unité de commande utilisateur mobile,
dans lequel, lors de la détection de la caractéristique liée au matériau par l'unité de commande utilisateur mobile, des données correspondant à la caractéristique sont fournies à un utilisateur par l'unité de commande utilisateur mobile et
dans lequel les données correspondant à la caractéristique contiennent des données concernant au moins un produit consommable du système de machine de traitement,
**caractérisé en ce**
**que** la caractéristique liée au matériau est une étiquette, laquelle est identifiée à l'aide de l'unité de commande utilisateur mobile et
**que** lors de ou à la suite de la détection de l'étiquette par l'unité de commande utilisateur mobile, un système de capteur de l'unité de commande utilisateur mobile est activé automatiquement.

9. Procédé selon la revendication 8,
**caractérisé en ce**
**que**, à l'aide de l'unité de commande utilisateur mobile, l'étiquette est identifiée sans action de commande utilisateur exclusivement par rapprochement de l'unité de commande utilisateur mobile de l'étiquette concrète et/ou que l'unité de commande utilisateur mobile, après identification d'une étiquette détectée, reçoit les données dépendantes de la caractéristique sans action de commande utilisateur supplémentaire de manière délivrée et/ou transmise par un dispositif de gestion de données.

10. Procédé selon la revendication 8 ou 9,
**caractérisé en ce**
**que** des données de produit consommable sont enregistrées et/ou transmises par un dispositif de gestion de données au moyen d'un système de capteur de l'unité de commande utilisateur mobile et/ou que les données concernant le produit consommable sont fournies en fonction de l'étiquette identifiée de manière concrète.

11. Procédé selon la revendication 8, 9 ou 10,
**caractérisé en ce**
**que** des données concernant des actions de commande utilisateur à exécuter sur une machine de traitement et/ou une machine de transformation dans le système de machine de traitement sont fournies à l'utilisateur par l'unité de commande utilisateur mobile et/ou que l'utilisateur est guidé et/ou dirigé par l'unité de commande utilisateur mobile par étapes individuelles d'actions de commande utilisateur.

12. Procédé selon la revendication 8, 9, 10 ou 11,
**caractérisé en ce**
**que**, après réponse électromagnétique d'une étiquette respective réalisée sous la forme d'une étiquette NFC par une interface NFC de l'unité de commande utilisateur mobile, des données concernant le produit consommable, lesquelles sont affectées par l'intermédiaire de l'étiquette NFC concrète ou mises en mémoire sur l'étiquette NFC, sont fournies à l'unité de commande utilisateur mobile par l'étiquette NFC concrète.

13. Procédé selon la revendication 8, 9, 10, 11 ou 12,
**caractérisé en ce**
**que** l'unité de commande utilisateur mobile communique sans fil et/ou par l'intermédiaire d'un serveur Web et/ou une pluralité d'unités de commande utilisateur mobiles sont reliées à un dispositif de gestion de données, en particulier un système de commande de production, du système de machine de traitement.

14. Procédé selon la revendication 8, 9, 10, 11, 12 ou 13,
**caractérisé en ce**
**que** des informations concernant des quantités de produit consommable en stock par rapport à un travail d'impression actuel d'une machine à imprimer et/ou concernant des quantités de produit consommable nécessaire lié au travail sont fournies par l'intermédiaire de l'unité de commande utilisateur mobile.

15. Utilisation d'une unité de commande utilisateur mobile d'une machine de traitement et/ou d'une machine de transformation d'un système de machine de traitement pour la fourniture de données concernant au moins un produit consommable du système de machine de traitement après une identification concrète d'une étiquette ou étiquette NFC détectée.
